(19) Europäisches Patentamt / European Patent Office / Office européen des brevets

(11) **EP 2 829 955 A2**

(12) **EUROPEAN PATENT APPLICATION**

(43) Date of publication:
**28.01.2015 Bulletin 2015/05**

(51) Int Cl.:
**G06F 3/041** (2006.01)     **G03B 21/00** (2006.01)
**G06F 3/042** (2006.01)     **H04N 9/00** (2006.01)

(21) Application number: **14176814.3**

(22) Date of filing: **11.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2013 JP 2013155000**

(71) Applicant: **Funai Electric Co., Ltd.**
**Daito city**
**Osaka 574-0013 (JP)**

(72) Inventor: **Yamagiwa, Daisuke**
**Osaka, Osaka 574-0013 (JP)**

(74) Representative: **Osha Liang SARL**
**32, avenue de l'Opéra**
**75002 Paris (FR)**

(54) **Electronic device**

(57)     An electronic device (1) includes a projection device (2) configured to project a light to a projection region (Aa) on a projection surface (F) and a detection device (3) separately disposed from the projection device (2). The detection device (3) includes a light detector (31) configured to detect a reflected light of the light projected from the projection device (2) and a notification light emitter (37) configured to emit to the projection surface (F) a notification light for indicating an inclination of the light detector relative to the projection surface (F). The notification light emitter (37) is further configured to emit the notification light in directions respectively fixed relative to the detection device (3) from a plurality of locations in the detection device (3), and each notification light passes through a same point on the projection surface (F) when the detection device (3) is installed at a predetermined inclination relative to the projection surface (F).

[FIG. 1]

EP 2 829 955 A2

**Description**

[Technical Field]

The present invention relates to an electronic device and more particularly relates to an electronic device configured to detect a reflected light of a projected light.

[Background Technology]

Conventionally, projectors that project a projection image on a projection surface such as a screen, a wall, or a desktop are known, and various devices using the projectors are also developed, such as that in Patent Document 1.

Patent Document 1 discloses a projector provided with a virtual user interface (VUI). In this projector, a projection unit, a light projection unit, and a visible light camera are securely disposed in a same enclosure. The projection unit projects a predetermined projection image on a projection surface. The light projection unit projects a light for detecting an object, such as a finger of a user, positioned over a projection region of the projection image. The visible light camera images a light reflected at the object over the projection region. Based on this imaging result, a position of the object over the projection image is detected by the VUI.

[Related Art Documents]

[Patent Documents]

[Patent Document 1] Japanese Unexamined Patent Application Publication No. 2012-108233

However, in conventional projectors, the projection unit needs to be at or above a certain height, and when the projection unit is installed in a same enclosure as the visible light camera, as in Patent Document 1, the installation position of the projection unit is limited, and the projectors are more likely to increase in size. Moreover, when the projection unit is securely disposed in the enclosure, as in Patent Document 1, where a size of an image projected to a projection surface F by the projection unit is fixed by a device and the location where the projector is installed is also limited.

Furthermore, even if the projection unit and the visible light camera may be separately disposed, the installation position of the visible light camera may shift from the position where the visible light camera may detect a reflected light.

[Summary of Invention]

One or more embodiments of the present invention provide an electronic device comprising a projection device and a detection device which can detect a reflected light of a light projected from the projection device even if the projection device and the detection device are disposed separately from each other.

An electronic device according to one or more embodiments of the present invention may comprise a projection device configured to project a light to a projection region on a projection surface and a detection device separately disposed from the projection device. The detection device may comprise a light detector configured to detect a reflected light of the light projected from the projection device, and a notification light emitter configured to emit to the projection surface a notification light for indicating an inclination of the light detector relative to the projection surface. The notification light emitter may be further configured or arranged to emit the notification light in a plurality of directions, for example in directions respectively fixed relative to the detection device, from a plurality of locations in the detection device. The notification light emitter may be further configured to emit the notification light so that each notification light may pass through a same point on the projection surface when the detection device is installed at a predetermined or particular inclination relative to the projection surface.

According to the above configuration, for example, the electronic device may be made smaller in size because the projection device and the detection device are disposed separately from each other. Moreover, the installation location of the electronic device may also be less restricted than in conventional devices. Moreover, the projection region may be set to a desired size according to the relative position of the projection device with respect to the projection surface because the projection device may be disposed without being restricted by the installation position of the detection device. Moreover, the light detector may be disposed at a predetermined or particular inclination relative to the projection surface based on the notification light emitted from the notification light emitter. Therefore, the detection device may detect the reflected light of the light projected from the projection device even if the projection device and the detection device are disposed separately from each other.

Furthermore, according to one or more embodiments of the electronic device, the notification light emitter may be configured to emit a notification light so that when the detection device is installed at the predetermined inclination relative to the projection surface, each notification light may project projection images of a spotted shape that overlap each other at the same point on the projection surface.

According to this configuration, for example, indication may be given of whether the detection device is installed at the predetermined inclination relative to the projection surface based on the projection images of the spot shape.

Furthermore, according to one or more embodiments of the electronic device, the notification light emitter may be configured to emit a notification light so that when the detection device is installed at the predetermined inclination relative to the projection surface, each notification light projects projection images of a line-segment shape where the same point on the projection surface may be an endpoint of each line-segment shape.

According to one or more embodiments of the above configuration, for example, indication may be given of whether the detection device is installed at the predetermined inclination relative to the projection surface based on the projection images of the line-segment shape.

Furthermore, according to one or more embodiments of the electronic device, the detection device may further comprise an inclination detector configured to detect an inclination of the detection device, and an inclination determinator configured to determine, based on a detection result of the inclination detector, whether an inclination of the detection device relative to the projection surface is at the predetermined inclination.

According to one or more embodiments of the above configuration, the inclination detector may detect, for example, a change in the inclination of the detection device, for example a change amount in the inclination of the detection device. Therefore, the inclination detector may determine, based on a detection result of the inclination detector, whether and to what extent the inclination of the detection device relative to the projection surface changed from the predetermined inclination.

Furthermore, according to one or more embodiments of the electronic device, the detection device may further comprise a driver or actuator configured to adjust, based on a determination result of the inclination determinator, an inclination of the light detector relative to the detection device.

According to one or more embodiments of the above configuration, for example, the orientation of the detection device may be adjusted by the driver or actuator based on the determination result of the inclination determinator. Therefore, the driver or actuator may automatically install the detection device at the predetermined inclination relative to the projection surface without the user reinstalling the detection device by hand. Moreover, the driver or actuator may automatically install the detection device at the predetermined inclination relative to the projection surface even if the inclination of the detection device changes after installation of the detection device.

Furthermore, according to one or more embodiments of the electronic device, the notification light emitter may be configured to emit a notification light so that the notification light may project the projection images of the line-segment shape on the projection surface as projection images for setting a position of at least an edge of a periphery, for example an outer periphery, of the projection region, nearest to the detection device in a detectable region where the light detector detects the reflected light.

According to one or more embodiments of the above configuration, for example, the position of the projection region may be set in the detectable region of the detection device by setting the position of at least the edge of the projection region nearest to the detection device based on the projection image of the notification light.

Furthermore, according to one or more embodiments of the electronic device, the projection device may comprise a light projector configured to project the light, and a regulatory light emitter configured to emit a regulatory light for regulating the projection region.

According to one or more embodiments of the above configuration, for example, the position of the projection region may be set in the detectable region of the light detector based on the regulatory light for regulating the projection region and the notification light.

Furthermore, according to one or more embodiments of the electronic device, the detection device may further comprise a region determinator configured to determine, based on a detection result of the light detector, whether a portion or an entirety of the projection region is outside the detectable region.

For example, each reflected light, such as the light projected from the projection device to the projection region and the regulatory light, may become incident to the light detector. Therefore, the region determinator may be configured to determine whether a portion or the entirety of the projection region is outside the detectable region based on the detection result of the light detector that detects these reflected lights.

Furthermore, according to one or more embodiments of the electronic device, the region determinator may be further configured to determine whether both endpoints of at least the edge of the outer periphery of the projection region, nearest to the detection device are in the detectable region.

For example, when the projection region is in the detectable region of the light detector, both endpoints of at least the edge of the projection region nearest to the detection device may be in the detectable region. Moreover, in this situation, both endpoints of an edge farthest from the detection device may often be also in the detectable region. Conversely, even if both endpoints of the edge farthest from the detection device are in the detectable region, there is a high possibility that both endpoints of the edge nearest to the detection device are not in the detectable region. Therefore, whether the projection region is in the detectable region is easily and more reliably determined by determining whether at least both endpoints are in the detectable region.

Furthermore, according to one or more embodiments of the electronic device, the detection device may further comprise an information output device configured to output information based on a determination result of the region determinator.

According to one or more embodiments of the above configuration, for example, the user may be informed with various notifications relating to a relationship between the detectable region of the light detector and the projection region based on the determination result of the region determinator.

Furthermore, according to one or more embodiments of the electronic device, when the region determinator determines that at least a portion of the projection region is outside the detectable region, the information output device may output a correction method for setting the projection region in the detectable region and for correcting at least either an installation position or an orientation of at least one of the projection device and the detection device.

According to one or more embodiments of the above configuration, for example, the user may be informed with the correction method for setting the projection region in the detectable region when at least a portion of the projection region is determined to be outside the detectable region of the light detector. Therefore, the user may, based on the output correction method, correct at least either the installation position or the orientation of at least one device from among the projection device and the detection device. Therefore, the user may conveniently set the entirety of the projection region in the detectable region.

Furthermore, according to one or more embodiments of the electronic device, at least one of the projection device and the detection device may further comprise a position determinator configured to determine, based on the detection result of the light detection, a relative position of the projection region relative to the detectable region, and a driver or actuator configured to adjust, based on a determination result of the position determinator, at least either the installation position or the orientation of at least one of the devices.

According to one or more embodiments of the above configuration, for example, in at least one device from among the projection device and the detection device, the driver or actuator may adjust at least either the installation position or the orientation of at least one of the devices based on the determination result of the position determinator. Therefore, the driver or actuator may automatically set the entirety of the projection region in the detectable region without the user reinstalling the device by hand. Moreover, even if the projection region moves outside the detectable region after installation of each device, the driver or actuator may automatically set the projection region in the detectable region.

According to one or more embodiments of the electronic device, the electronic device may comprise a detection device detecting the reflected light of the light projected from the projection device even if the projection device and the detection device are disposed separately from each other.

[Brief Description of Drawings]

FIG. 1 is an external perspective view of a projector according to one or more embodiments of a first example of the present invention.

FIG. 2 is a side view for describing a light path of the projector according to one or more embodiments of the present invention.

FIG. 3 is a top view for describing the light path of the projector according to one or more embodiments of the present invention.

FIG. 4A is a side view illustrating a size change of a projection region according to an installation position of a projector according to one or more embodiments of the present invention.

FIG. 4B is a top view illustrating the size change of the projection region according to the installation position of the projector according to one or more embodiments the present invention.

FIG. 5 is a block diagram illustrating a configuration of a projector according to one or more embodiments of the first example of the present invention.

FIG. 6 is a block diagram illustrating a configuration of a sensor according to one or more embodiments of the first example of the present invention.

FIG. 7 is a flowchart for describing an installation method of the projector according to one or more embodiments of the present invention.

FIG. 8A is a side view illustrating a sensitivity distribution of a light detector in one or more embodiments of the first example of the present invention.

FIG. 8B is a plan view illustrating the sensitivity distribution of the light detector in one or more embodiments of the first example of the present invention.

FIG. 9A is a side view illustrating a sensor installed at a predetermined inclination relative to a projection surface according to one or more embodiments of the present invention.

FIG. 9B is a top view illustrating the sensor of FIG. 9A.

FIG. 10A is a side view illustrating a sensor installed at a first inclination relative to the projection surface according to one or more embodiments of the present invention.

FIG. 10B is a plan view illustrating the sensor of FIG. 10A.

FIG. 11A is a side view illustrating a sensor installed at a second inclination relative to the projection surface according to one or more embodiments of the present invention.

FIG. 11B is a plan view illustrating the sensor of FIG. 11A.

FIG. 12 is a plan view illustrating a positional relationship between a projection region and notification lines in one or more embodiments of the first example of the present invention.

FIG. 13 is a side view illustrating a sensor installed in a position nearest to the projection region according to one or more embodiments of the present invention.

FIG. 14 is a side view illustrating a sensor installed in a position farthest from the projection region according to one or more embodiments of the present invention.

FIG. 15 is a flowchart for describing a calibration process of an installation position of the sensor according to one or more embodiments of the first example of the present invention.

FIG. 16 is an external perspective view of a projector according to one or more embodiments of a second example of the present invention.

FIG. 17 is a block diagram illustrating a configuration of a projector according to one or more embodiments of the second example of the present invention.

FIG. 18 is a plan view illustrating a positional relationship between a projection region and notification lines according to one or more embodiments of the second example of the present invention.

FIG. 19 is a flowchart for describing a calibration process of an installation position of a sensor according to one or more embodiments of the second example of the present invention.

FIG. 20 is a block diagram illustrating a configuration of a sensor according to one or more embodiments of a third example of the present invention.

FIG. 21 is a block diagram illustrating a configuration of a sensor according to a modified example of one or more embodiments of the third example of the present invention.

FIG. 22 is a block diagram illustrating a configuration of a projector according to one or more embodiments of a fourth example of the present invention.

FIG. 23 is an external perspective view of a sensor according to one or more embodiments of a fifth example of the present invention.

FIG. 24 is a side view illustrating a sensor installed at the predetermined inclination relative to the projection surface according to one or more embodiments of the present invention.

FIG. 25 is a side view illustrating a sensor installed at the first inclination relative to the projection surface according to one or more embodiments of the present invention.

FIG. 26 is a side view illustrating a sensor installed at the second inclination relative to the projection surface according to one or more embodiments of the present invention.

[Detailed Description of Embodiments]

Embodiments of the present invention will be described below with reference to the drawings.

(First Example)

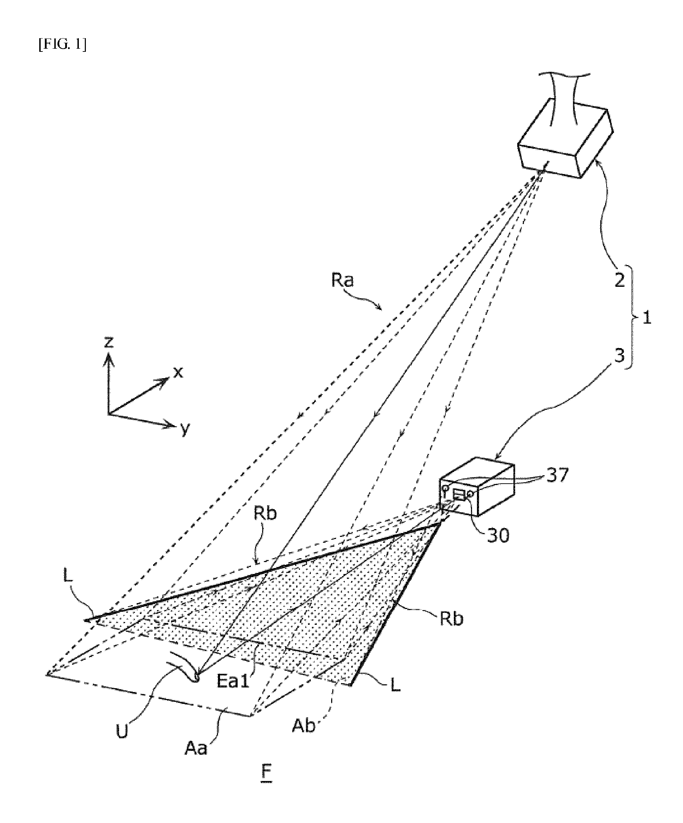

An example of electronic device according to one or more embodiments is a projector. FIG. 1 shows an exemplary projector 1, which may be a projector of a laser light scanning type having a virtual user interface (VUI) function. The projector 1 is an example of an electronic device that may be used as an input device because of the VUI function. The VUI function is a virtual input interface where a user may perform operation input on a projection image (such as an image of a keyboard or an operation panel) projected to a projection surface F.

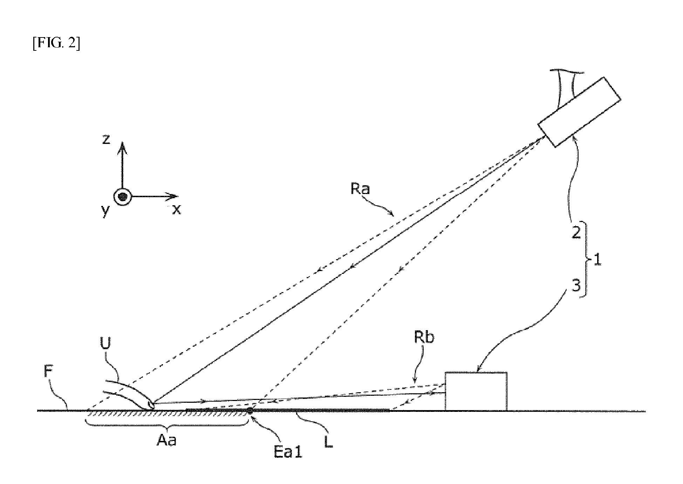

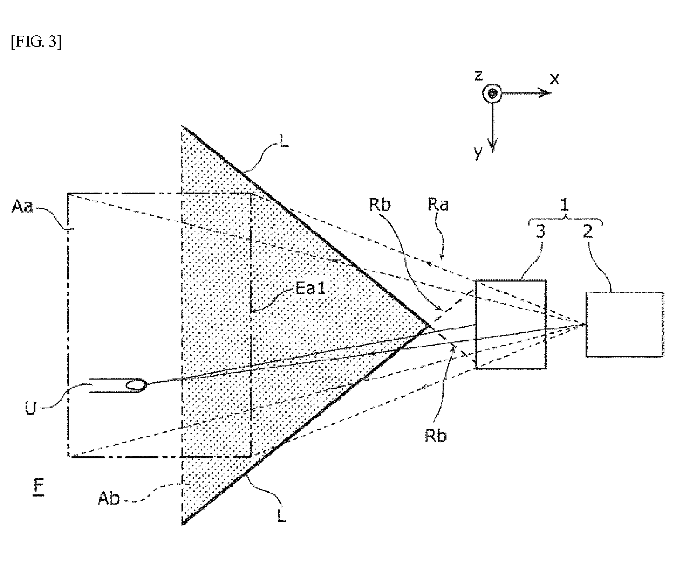

FIG. 1 is an external perspective view of a projector according to one or more embodiments of a first example of the present invention. Moreover, FIG. 2 is a side view for describing a light path of the projector. Moreover, FIG. 3 is a top view for describing the light path of the projector. Directions parallel to the projection surface F will be described as an X direction and a Y direction and a normal direction of the projection surface F will be described as a Z direction. Moreover, the X direction, the Y direction, and the Z direction are mutually orthogonal. Moreover, in FIGS. 2 and 3, to facilitate understanding of main portions, illustration is omitted for each reflected light of a scanning laser light Ra reflected at the projection surface F and a notification light Rb that will be described below.

As illustrated in FIGS. 1 to 3, the projector 1 may be configured to include a projector device 2 and a sensor 3. The projector device 2 and the sensor 3 are disposed separately and independently of each other. That is, the projector device 2 and the sensor 3 are not housed in a same enclosure but may be housed in separate enclosures. Because of this, the projector 1 may be made smaller than conventional devices. Moreover, the installation location of the projector 1 is not restricted as in the conventional devices, and the projector 1 may be installed comparatively freely.

The projector device 2 may be a projector device that projects the scanning laser light Ra on the projection surface F, which may be an upper surface of a desk, a screen, a wall, or the like, and may be installed, for example, on a ceiling in a room. Alternatively, the projector device 2 may be installed on a stand. As illustrated in FIGS. 1 to 3, the projector device 2 may project a predetermined projection image (e.g. still image, moving image, or the like) in a projection region Aa by projecting the scanning laser light Ra to the projection region Aa on the projection surface F. This projection image is not limited in particular.

The sensor 3 is an example of detection device. The sensor 3 may be a detection device that detects a light incident to a light incidence surface 30 and may be installed, for example, on the projection surface F. Alternatively, the sensor 3 may be set on a stand. The sensor 3 detects, for example, the reflected light of the scanning laser light Ra reflected at the projection region Aa or at an object U (e.g. a finger of the user, a touch pen, or the like) positioned over the projection region Aa. A light intensity of the reflected light of the scanning laser light Ra reflected at the projection region Aa is different from a light intensity of the reflected light of the scanning laser light Ra reflected at the object U positioned over the projection region Aa. The sensor 3 may detect and differentiate the reflected light of the scanning laser light Ra reflected at the projection region Aa and the reflected light of the scanning laser light Ra reflected at the object U based on a difference of the light intensities of these reflected lights. When the sensor 3 detects each reflected light from the projection region Aa and the object U, the sensor 3 detects a relative position of the object U relative to the projection image projected to the projection region Aa by the VUI function and detects an input operation by the object U based on this detection result.

Furthermore, the sensor 3 may emit the notification light Rb of a wavelength in a visible light region from a notification light emitter 37 and, as illustrated in FIGS. 1 to 3, projects to the projection surface F two notification lines L for setting positions of the sensor 3 and the projection region Aa. These two notification lines L indicate an inclination of the sensor 3 relative to the projection surface F, may be reference lines for setting the position of the projection region Aa, and, in particular, indicate whether the sensor 3 is set at an appropriate inclination relative to the projection surface F. The notification lines L may be used for regulating a position of an edge Ea1, which may be included in an outer periphery of the projection region Aa and is nearest to the sensor 3. The edge Ea1 of the projection region Aa will be referred to hereinbelow as a lower edge.

For example, the sensor 3 may detect the reflected light from the projection region Aa if the two notification lines L form a virtual region Ab of a triangular shape and if the lower edge Ea1 of the projection region Aa is in the virtual region Ab. Because of this, it is sufficient for the user to install the projector 1 (in particular, the sensor 3 thereof) in an appropriate position while referring to the projection region Aa and the two notification lines L. An exemplary installation method of the projector 1 and a calibration process of an installation position of the sensor 3 will be described below.

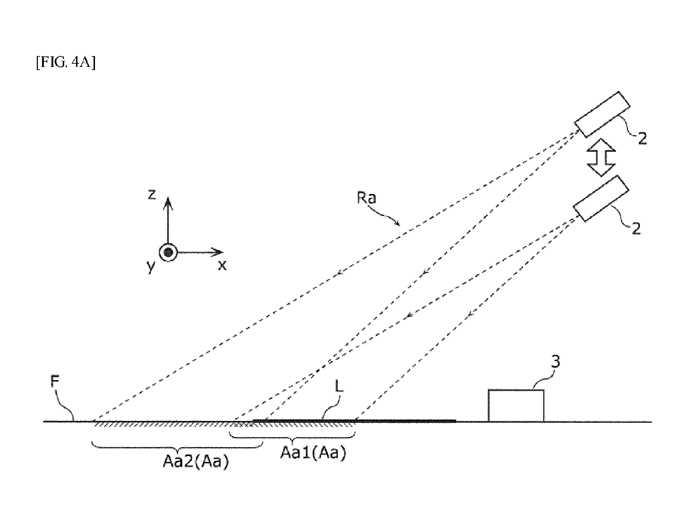

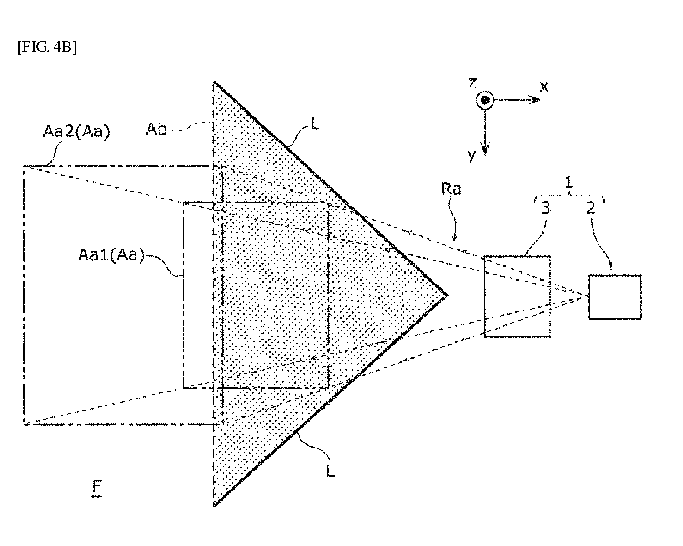

Furthermore, the projector device 2 may be disposed in any position relative to the projection surface F, independently of the sensor 3. Because of this, a size of the projection region Aa (projection image) may be changed according to a relative positional relationship between the projection surface F and the projector device 2. FIGS. 4A and 4B are a side view and a top view illustrating a size change of the projection region Aa according to an installation position of a projector device. In FIGS. 4A and 4B, to facilitate understanding of the main portions, illustration is omitted for the notification light Rb and each reflected light of the scanning laser light Ra reflected at the projection surface F and the notification light Rb.

As illustrated in FIGS. 4A and 4B, when an installation height of the projector device 2 in the Z direction is lowered, a size of a projection region Aa1 decreases because a distance between the projection region Aa1 on the projection surface F and the projector device 2 decreases. Meanwhile, when the installation height of the projector device 2 in the Z direction is raised, a size of a projection region Aa2 increases because a distance between the projection region Aa2 on the projection surface F and the projector device 2 increases. In this manner, the sensor 3 may detect the reflected light from the projection region Aa, even when the size of the projection region Aa changes, by installing the sensor 3 in an appropriate position relative to the projection region Aa.

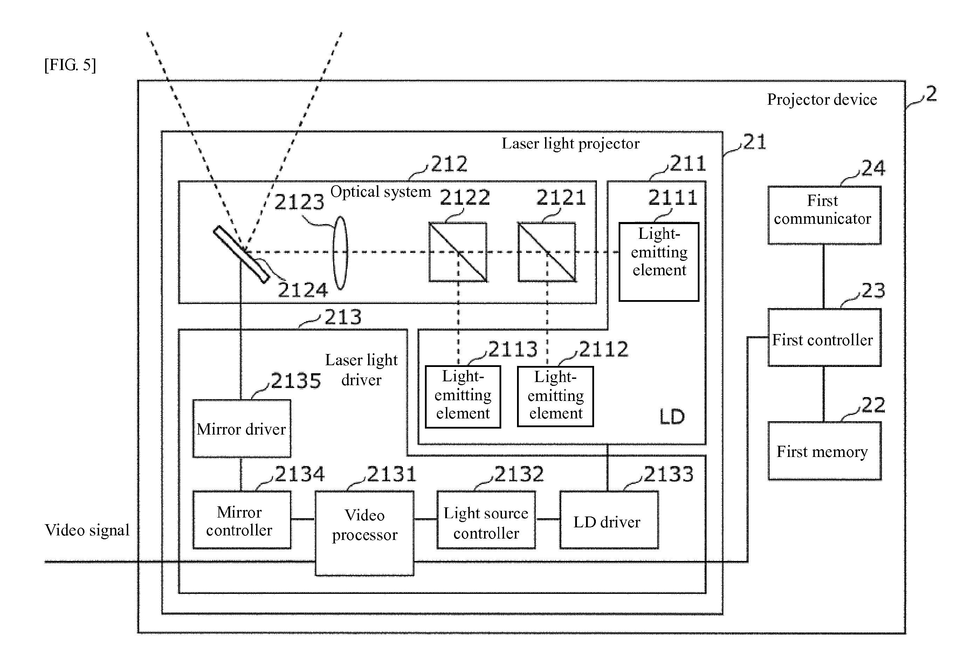

Next, a configuration of the projector device 2 according to one or more embodiments will be described. FIG. 5 is a block diagram illustrating a configuration of a projector device according to one or more embodiments of the first example of the present invention. The projector device 2 may include a laser light projector 21, a first memory 22, a first controller 23, and a first communicator 24.

The laser light projector 21 may project on the projection surface F the scanning laser light Ra for projecting the projection image to the projection region Aa. This laser light projector 21 may include a laser diode 211, an optical system 212, and a laser light driver 213. The laser diode 211 will be referred to hereinbelow as an LD.

The LD 211 may be a light source that emits the laser light Ra of a wavelength in a visible light region. The LD 211 may be, for example, a light-emitting element that emits a laser light of a single color or may be configured including a plurality of light-emitting elements 2111, 2112, 2113 that emit laser lights of mutually different colors (such as red, green, and blue).

The optical system 212 may be an optical system that projects to the projection surface F the laser light Ra emitted from the LD 211. The optical system 212 may be configured including, for example, dichroic mirrors 2121, 2122 that synthesize on a same axis the laser light Ra emitted from the plurality of light-emitting elements 2111, 2112, 2113; a collimator lens 2123 that converts the laser light Ra into a parallel light; and a scanning mirror 2124 that adjusts an emission direction of the laser light Ra.

The laser light driver 213 may be a driver that scans the projection region Aa two dimensionally with the laser light Ra emitted from the LD 211 by driving the LD 211 and the optical system 212. The laser light driver 213 may be configured including, for example, a video processor 2131 that processes a control signal output from the first controller 23, a light source controller 2132 and an LD driver 2133 that control emission and a light intensity of the LD 211 based on the control signal, and a mirror controller 2134 and a mirror driver 2135 that drive controls a scanning mirror based on the control signal.

For example, the laser light driver 213 scans the laser light Ra in the Y direction from one end (for example, an end portion on the upper side of FIG. 3) to another end (for example, an end portion on the lower side of FIG. 2) of the projection region Aa based on a horizontal synchronization signal output from the first controller 23. Moreover, the laser light driver 213, once one scan in the Y direction is finished, again scans the laser light Ra in the Y direction after shifting the laser light Ra a predetermined distance in the X direction in FIG. 1 based on a vertical synchronization signal output from the first controller 23. By repeating these operations, the projection image is projected to the projection region Aa by the laser light Ra two dimensionally scanning an entire region of the projection region Aa. A video signal synchronized with such a horizontal synchronization signal and vertical synchronization signal is supplied to the video processor 2131. The projector device 2 may project an image represented by the video signal supplied to the video processor 2131.

The first memory 22 may be a non-volatile storage medium and stores a program, control information, and the like used by the first controller 23. The first memory 22 may be a separate component from the first controller 23, as in FIG. 5, but may be included in the first controller 23.

The first controller 23 may control each component of the projector device 2 using the program, the control information, and the like stored in the first memory 22. This first controller 23 may be realized as a semiconductor chip such as a microprocessing unit (MPU) or a central processing unit (CPU) or may be realized as an electrical circuit.

The first communicator 24 may be an interface for communication with the sensor 3. Those skilled in the art will appreciate that various known communication interface options may be used.

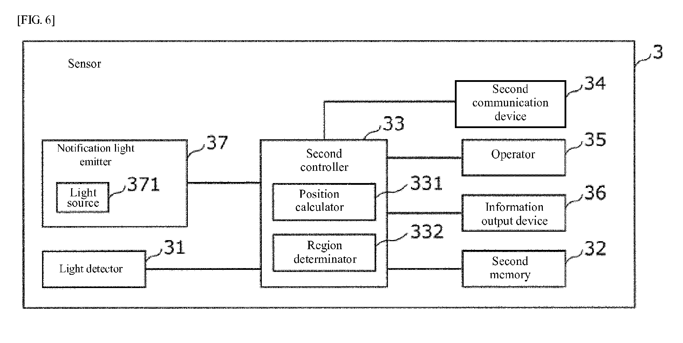

Next, a configuration of the sensor 3 according to one or more embodiments will be described. FIG. 6 is a block diagram illustrating a configuration of a sensor according to one or more embodiments of the first example of the present invention. The sensor 3 may include a light detector 31, a second memory 32, a second controller 33, a second communicator 34, an operator 35, an information output device 36, and the notification light emitter 37. Additionally, a remote controller (not illustrated) with which the user performs operation input and a reception unit (not illustrated) that receives an input signal from the remote controller may be provided.

The light detector 31 may be a sensor having a light-receiving element such as a photodiode and detects the light incident to the light incidence surface 30 (see FIG. 1) of the sensor 3. The light detector 31 may detect, for example, the reflected light of the scanning laser light Ra reflected at the projection region Aa and at the object U positioned over the projection region Aa.

The second memory 32 may be a non-volatile storage medium and stores a program, control information, and the like used by the second controller 33. The second memory 32 may be a separate component from the second controller 33, as in FIG. 6, but may be included in the second controller 33.

The second controller 33 may control each component of the sensor 3 using the program, the control information, and the like stored in the second memory 32. The second controller 33 may be realized as a semiconductor chip such as a microprocessing unit (MPU) or a central processing unit (CPU) or may be realized as an electrical circuit.

The second controller 33 may include a position calculator 331 and a region determinator 332. The position calculator 331 and the region determinator 332 may each be realized as an electrical circuit or may be functional units of the second controller 33 realized by using the program and the control information stored in the second memory 32.

The position calculator 331 may calculate a relative position of the object U relative to the projection region Aa based on a detection result (for example, the reflected light of the scanning laser light Ra) of the light detector 31. This relative position is calculated based on a result of the light detector 31 detecting, for example, each reflected light of the scanning laser light Ra reflected at the projection region Aa and the object U.

The region determinator 332 may determine whether a portion or an entirety of the projection region Aa is outside a detectable region based on the detection result of the light detector 31. Moreover, once the region determinator 332 determines that at least a portion of the projection region Aa is shifted from the detectable region (not illustrated), the region determinator 332 determines to what extent the projection region Aa is shifted based on the detection result of the light detector 31.

The second communicator 34 may be an interface for communication with the projector device 2. Those skilled in the art will appreciate that various known communication interface options may be used.

The operator 35 may be an input unit that accepts various operation inputs by the user.

The information output device 36 may be an external output interface for outputting various information to the user. The information output device 36 may inform the user that a portion or the entirety of the projection region Aa is shifted from the detectable region of the light detector31 when the region determinator 332 determines that such is the case. Moreover, the user is informed of the calibration method of the installation position (and an orientation) of the sensor 3 to position the entirety of the projection region Aa in the detectable region. The information content and an informing method of the information output device 36 is not limited in particular. The information output device 36 may inform by a voice, using an audio output unit (not illustrated) such as a speaker, or may display the informing content on a display unit (not illustrated) such as a liquid crystal display. Alternatively, the information output device 36 may display a content (for example, a notification such as "Please move the sensor") to be informed to the user to the projection region Aa on the projection surface F by the second communicator 34 communicating with the projector device 2.

The notification light emitter 37 may be provided in a plurality of different locations in the sensor 3. The notification light emitter 37 may include a light source 371 that emits the notification light Rb of the wavelength in the visible light region in directions of ranges respectively fixed relative to the sensor 3 and may project the two notification lines L (see FIGS. 1 to 3) of a substantially same length on the projection surface F. This light source 371 is not limited in particular: for example, a light-emitting element that emits a light in the visible light region, such as a laser diode element or an LED; a discharge tube; or the like may be used.

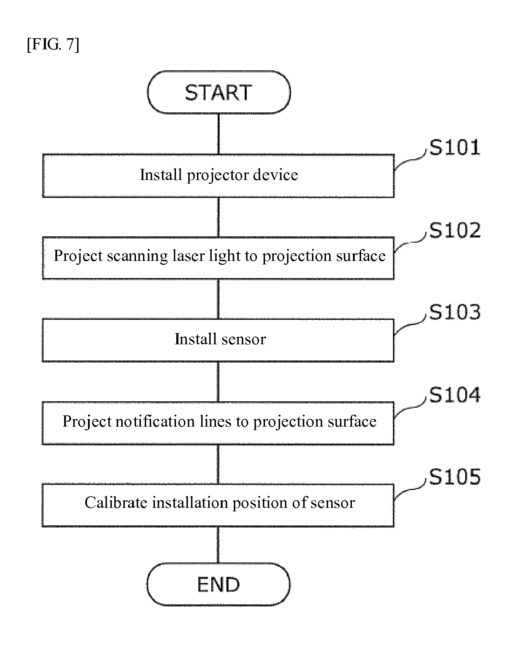

Next, an exemplary installation method of the projector 1 according to one or more embodiments will be described. FIG. 7 is a flowchart for describing an installation method of the projector.

First, the projector device 2 is installed on the ceiling in the room (S101), and the scanning laser light Ra is projected to the projection surface F (S102). Next, the sensor 3 is mounted on the projection surface (S103), and the notification light Rb is projected to project the notification lines L on the projection surface F (S104). Then, the calibration process of the installation position of the sensor 3 is performed to position the projection region Aa in a detectable region of the sensor 3 (S105). When the calibration process is completed, the sensor 3 stops projecting the notification light Rb, ending an installation of the projector 1.

In the installation method described above, when the calibration process in step 105 finishes, projection of the notification light Rb stops, but the notification light Rb may be projected during the installation process of the projector 1 or in a period other than during the installation process or may be projected continuously. Moreover, projection and projection stopping of the notification light Rb may be switched according to an operation input by the user accepted by the operator 35.

Next, an exemplary installation condition of the projector 1 according to one or more embodiments of the first example of the present invention will be described.

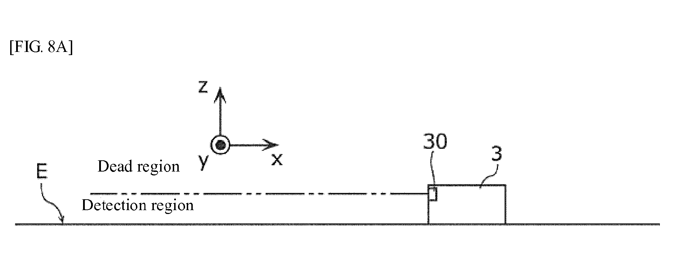

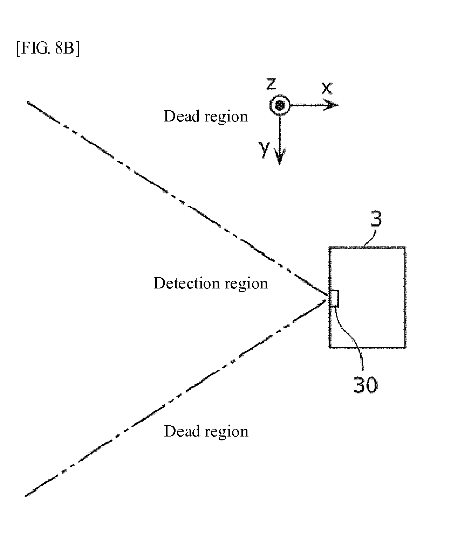

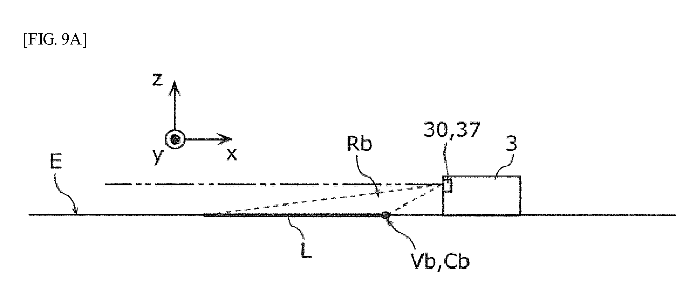

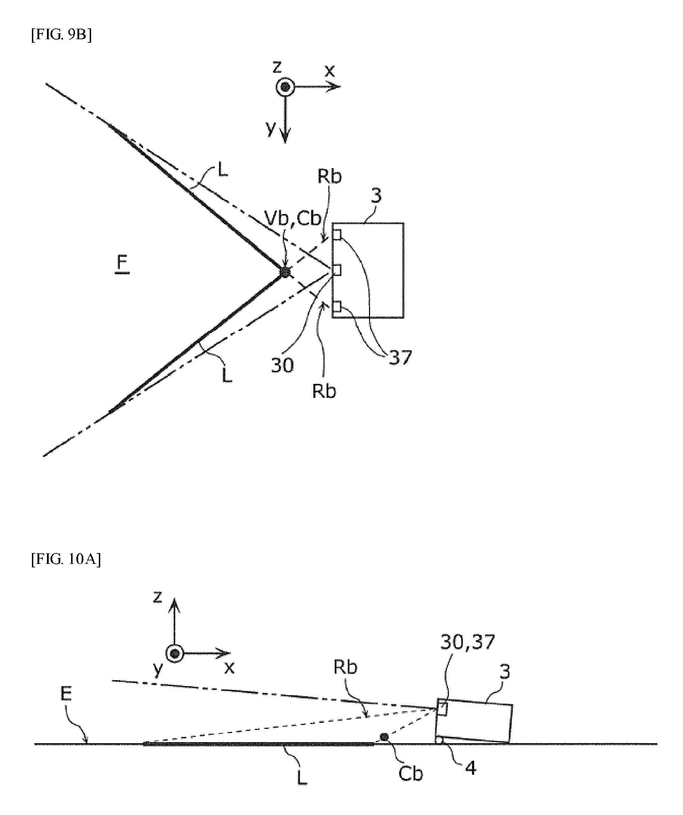

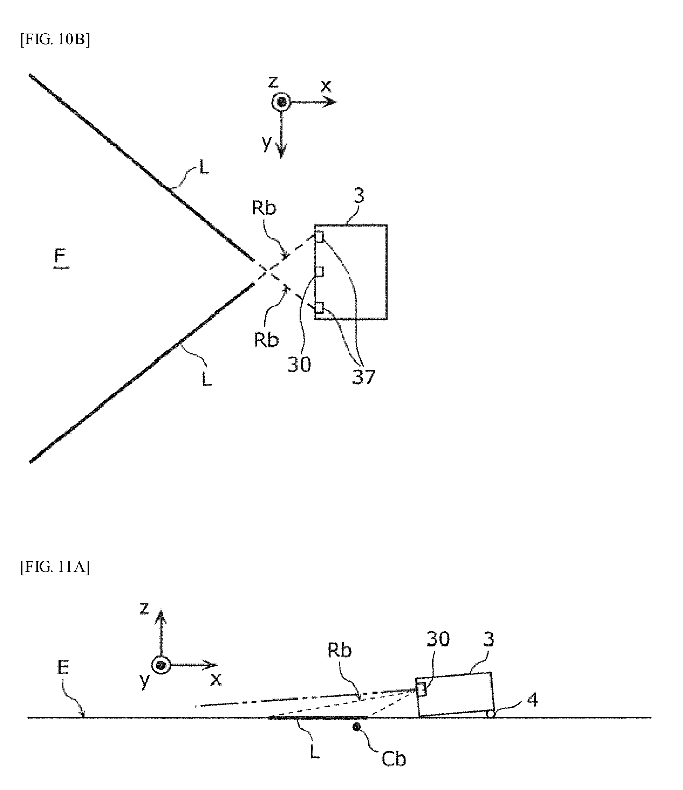

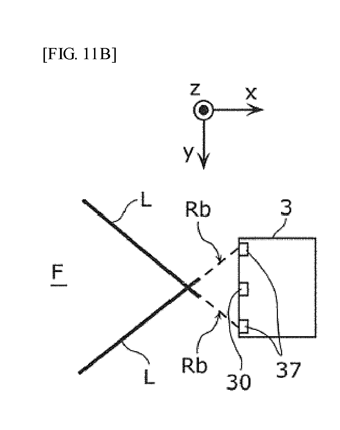

FIG. 8A is a side view illustrating a sensitivity distribution of the light detector 31 in one or more embodiments of the first example of the present invention. Moreover, FIG. 8B is a plan view illustrating the sensitivity distribution of the light detector 31 in one or more embodiments of the first example of the present invention. Moreover, FIG. 9A is a side view illustrating a case in which the sensor 3 is installed at a predetermined inclination relative to the projection surface F. Moreover, FIG. 9B is a plan view illustrating the case in which the sensor 3 is installed at the predetermined inclination relative to the projection surface F. Moreover, FIG. 10A is a side view illustrating a case in which the sensor 3 is installed at a first inclination, which is different from the predetermined inclination, relative to the projection surface F. Moreover, FIG. 10B is a plan view illustrating the case in which the sensor 3 is installed at the first inclination relative to the projection surface F. Moreover, FIG. 11A is a side view illustrating a case in which the sensor 3 is installed at a second inclination, which is different from the predetermined inclination, relative to the projection surface F. Moreover, FIG. 11B is a plan view illustrating the case in which the sensor 3 is installed at the second inclination relative to the projection surface F. To facilitate the description, the case in which the sensor 3 is installed at the predetermined inclination relative to the projection surface F is referred to hereinbelow as a case in which the sensor 3 is installed parallel to the projection surface F.

As illustrated in FIG. 8A, in a side view, the light detector 31 may only detect a light incident to the light incidence surface 30 from a detection region and does not detect a light incident to the light incidence surface 30 from a dead region. Moreover, as illustrated in FIG. 8B, in a plan view as well, the light detector 31 may similarly only detect the light incident to the light incidence surface 30 from the detection region and does not detect the light incident to the light incidence surface 30 from the dead region. In FIGS. 8A and 8B, the two-dot chain line passing through the light incidence surface 30 illustrates a boundary between the detection region and the dead region of the light detector 31.

That the detection region of the light detector 31 cover over the entirety of the projection region Aa at a uniform height may be an installation condition the projection device 1 must satisfy in order to appropriately detect the object U positioned over the projection region Aa. The two notification lines L described above are reference lines for setting the position of the sensor 3 and the projection region Aa so such an installation condition is satisfied.

As illustrated in FIG. 9A, the boundary (see FIG. 8A) of the detection region in the side view is made to be parallel to the projection surface F when the sensor 3 is installed parallel to the projection surface F.

As illustrated in FIGS. 9A and 9B, when the sensor 3 is installed parallel to the projection surface F, an emission direction of each notification light Rb is fixed relative to the sensor 3 so each notification light Rb emitted toward an endpoint of each notification line L near the sensor 3 passes through a same point on the projection surface F. Moreover, when the sensor 3 is installed parallel to the projection surface F, the emission direction of each notification light Rb may be fixed relative to the sensor 3 so each notification light Rb emitted toward an endpoint of each notification line L away from the sensor 3 passes through along a boundary line between the detection region and the dead region.

By the emission direction of each notification light Rb being fixed in this manner, an intersection Cb of the notification lights Rb is positioned on the projection surface F in the case in which the sensor 3 is installed parallel to the projection surface F. Because of this, two notification lines L of a line-segment shape contacting each other at an endpoint Vb are projected to the projection surface F. Moreover, in the plan view, the virtual region Ab of the triangular shape formed by the two notification lines L is included in the detection region of the sensor 3.

As illustrated in FIGS. 10A and 10B, in the case in which the sensor 3 is installed at the first inclination, which is not parallel to the projection surface F due to, for example, a light incidence surface 30 side of the sensor 3 being lifted up by a foreign object 4, the intersection Cb of the notification lights Rb is positioned above the projection surface F. Because of this, the two notification lines L separated from each other are projected on the projection surface F.

As illustrated in FIGS. 11A and 11B, in the case in which the sensor 3 is installed at the second inclination, which is not parallel to the projection surface F due to, for example, a side of the sensor 3 opposite the light incidence surface 30 being lifted up by the foreign object 4, the intersection Cb of the notification lights Rb is positioned below the projection surface F. Because of this, the two notification lines L intersecting each other are projected on the projection surface F.

The user may determine whether the sensor 3 is disposed parallel to the projection surface F by whether the two notification lines L projected on the projection surface F are seen contacting each other at the endpoints and may adjust disposal of the sensor 3 so that the sensor 3 becomes parallel to the projection surface F.

Furthermore, description will be continued for exemplary installation conditions of the projector 1 according to one or more embodiments of the first example of the present invention. The description hereinbelow will refer to a case in which the sensor 3 is installed parallel to the projection surface F (see FIGS. 9A and 9B).

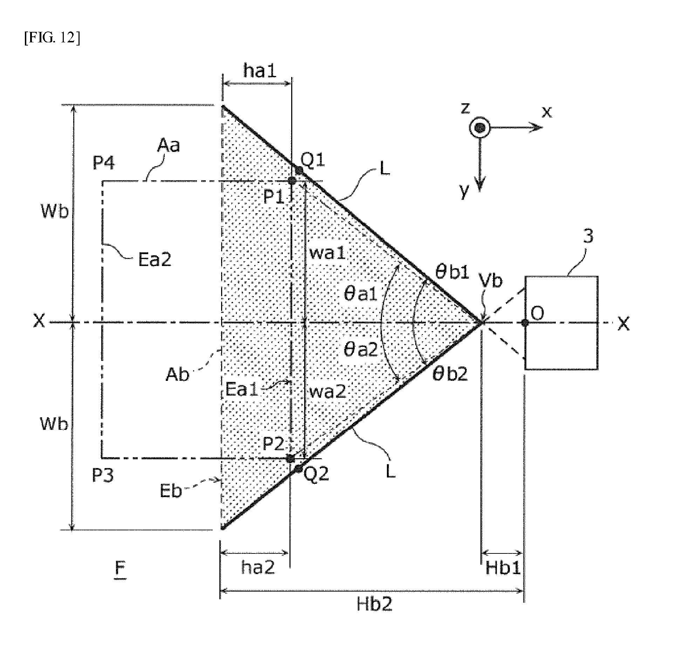

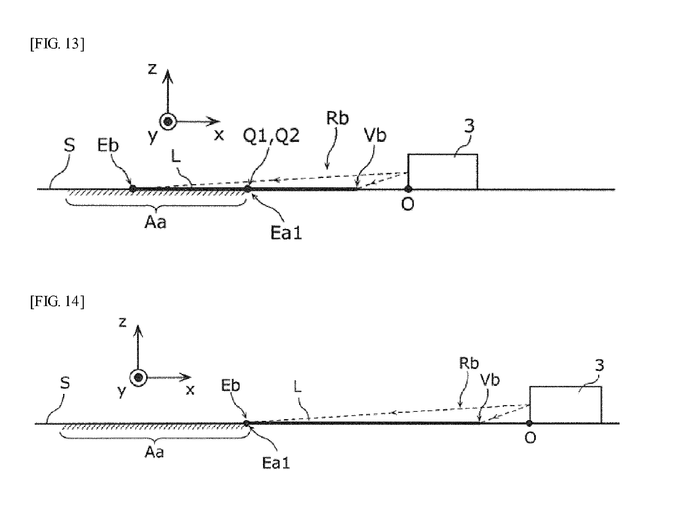

FIG. 12 is a plan view illustrating a positional relationship between a projection region and notification lines according to one or more embodiments of the first example of the present invention. Moreover, FIG. 13 is a side view illustrating a case in which the sensor is installed in a position nearest to the projection region. Moreover, FIG. 14 is a side view illustrating a case in which the sensor is installed in a position farthest from the projection region. To facilitate understanding of the main components, in FIG. 12, illustration is omitted for the scanning laser light Ra, the notification light Rb, and the reflected lights thereof, and in FIGS. 13 and 14, illustration is omitted for the scanning laser light Ra and each reflected light.

As illustrated in FIG. 12, the two notification lines L may be projected substantially axisymetrically relative to a one-dot chain line X-X. This one-dot chain line X-X passes through a midpoint of an endpoint (referred to hereinbelow as the endpoint Vb) nearest to the sensor 3 and an endpoint (referred to hereinbelow as an endpoint Eb) farthest from the sensor 3; each endpoint is included in the outer periphery of the virtual region Ab formed between the two notification lines L. Moreover, viewed from the normal direction (Z direction) of the projection surface F, the one-dot chain line X-X passes through an orthogonal projection point O to the projection surface F of a center point of the light incidence surface 30.

As illustrated in FIG. 12, the sensor 3 may be installed on the projection surface F so that the lower edge Ea1 of the projection region Aa is positioned in the virtual region Ab between the two notification lines L. At this time, the lower edge Ea1 of the projection region Aa may be substantially parallel to an edge Eb of the virtual region Ab.

Furthermore, as illustrated in FIG. 13, the sensor 3 may be brought nearer to the projection region Aa until both endpoints of the lower edge Ea1 of the projection region Aa are substantially in a same position as points Q1, Q2, which are points on the notification lines L nearest to each endpoint. Moreover, as illustrated in FIG. 14, the sensor 3 may be distanced from the projection region Aa until the lower edge Ea1 of the projection region Aa is substantially in a same position as the edge Eb of the virtual region Ab.

Conditions for making the projection region Aa be in the detectable region of the sensor 3 may be represented by the following three formulas 1 to 3.

$$0 < wa1, wa2 \leq Wb \qquad \text{(Formula 1)}$$

EP 2 829 955 A2

$$0 \leq \text{ha1}, \text{ha2} \leq (\text{Hb2}-\text{Hb1}) \quad \text{(Formula 2)}$$

$$\theta a1 \leq \theta b1, \text{ and } \theta a2 \leq \theta b2 \quad \text{(Formula 3)}$$

Here, in formula 1 described above, a gap (that is, a shortest distance in the Y direction) between one endpoint P1 in the lower edge Ea1 of the projection region Aa and the one-dot chain line X-X is defined as wa1, and a gap between another endpoint P2 and the one-dot chain line X-X is defined as wa2. Moreover, a gap between an endpoint of the upper edge Eb of the virtual region Ab between the two notification lines L and the one-dot chain line X-X is defined as Wb.

Furthermore, in formula 2 described above, a gap (that is, a shortest distance in the X direction) between the one endpoint P1 in the lower edge Ea1 of the projection region Aa and the edge Eb of the virtual region Ab is defined as ha1, and a gap between the other endpoint P2 and an upper edge Eb2 is defined as ha2. Moreover, a distance in the X direction between the endpoint Vb of the virtual region Ab and the orthogonal projection point O is defined as Hb1, and a distance in the X direction between the edge Eb of the virtual region Ab and the orthogonal projection point O is defined as Hb2. However, 0 < Hb1 < Hb2.

Furthermore, in formula 3 described above, an angle formed by a virtual line passing through the one endpoint P1 in the lower edge Ea1 of the projection region Aa and the endpoint Vb of the virtual region Ab and the one-dot chain line X-X is defined as $\theta a1$, and an angle formed by a virtual line passing through the other endpoint P2 and the endpoint Vb of the virtual region Ab and the one-dot chain line X-X is defined as $\theta a2$. Moreover, an angle formed by a virtual line passing through the point Q1 on one notification line L nearest to the endpoint P1 and the endpoint Vb of the virtual region Ab and the one-dot chain line X-X is defined as $\theta b1$. Moreover, an angle formed by a virtual line passing through the point Q2 on another notification line L nearest to the endpoint P2 and the endpoint Vb of the virtual region Ab and the one-dot chain line X-X is defined as $\theta b2$.

Both endpoints P1, P2 of the lower edge Ea1 of the projection region Aa are away from the outer periphery of the virtual region Ab (that is, 0 < wa1, wa2 < Wb in formula 1 described above; 0 < ha1, ha2 < (Hb2-Hb2) in formula 2 described above; and $\theta a1 < \theta b1$ and $\theta a2 < \theta b2$ in formula 3 described above; wa1 = wa2 in formula 1 described above and $\theta a1 = \theta a2$ in formula 3 described above). By configuring in this manner, the sensor 3 may reliably detect the reflected light from the entirety of the projection region Aa because the lower edge Ea1 of the projection region Aa may be more accurately positioned in the virtual region Ab.

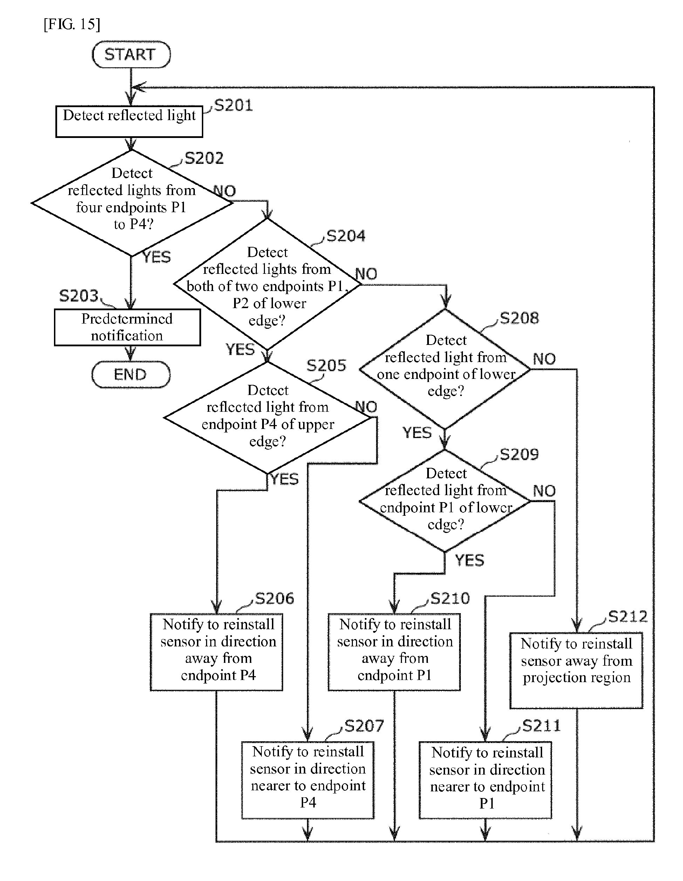

Next, a calibration process of the installation position of the sensor 3 according to one or more embodiments will be described. FIG. 15 is a flowchart for describing a calibration process of an installation position of the sensor in one or more embodiments of the first example of the present invention. When the calibration process in FIG. 15 starts, the scanning laser light Ra is being projected to the projection surface F from the projector device 2 and the notification light Rb is being emitted from the sensor 3.

First, the sensor 3 detects the reflected light of the scanning laser light Ra reflected at the projection region Aa (step S201). Moreover, the sensor 3, based on a detection result of the reflected light, determines whether reflected lights from each endpoint P1 to P4 (see FIG. 12) of the lower edge Ea1 and an edge Ea2, which is farthest from the sensor 3, included in the outer periphery of the projection region Aa are detected (step S202). The edge Ea2 of the projection region Aa will be referred to hereinbelow as an upper edge.

If all the reflected lights from the four endpoints P1 to P4 are detected (YES at step S202), the user is informed with a predetermined notification (step S203). For example, the user is informed that the sensor 3 is installed in the appropriate position. Additionally, the user may also be informed with a guide to an installation method where the lower edge Ea1 of the projection region Aa becomes substantially parallel to the lower edge Eb1 (or the upper edge Eb2) of the virtual region Ab between the two notification lines. Then, after the user is informed that the calibration process is completed, the calibration process in FIG. 15 ends.

Furthermore, if the reflected light from any of the four endpoints P1 to P4 is not detected (NO at step S202), whether the reflected lights from both endpoints P1, P2 of the lower edge Ea1 of the projection region Aa are detected is determined (step S204).

If the reflected lights from both of the two endpoints P1, P2 are detected (YES at step S204), the sensor 3 further determines whether the reflected light from one endpoint P4 on the upper edge Ea2 of the projection region Aa is detected (step S205).

If the reflected light from the one endpoint P4 is detected (YES at step S205), the user is informed to reinstall the orientation of the sensor 3 in a direction away from the endpoint P4 (step S206). That is, the user is informed to reinstall the orientation of the sensor 3 in, for example, a counterclockwise manner viewed from the normal direction (Z direction) of the projection surface F in FIG. 12. The user thus informed may reinstall so that the position of the sensor 3 is at the appropriate position. Then, the calibration process returns to step S201.

Furthermore, if the reflected light from the one endpoint P4 is not detected (NO at step S205), the user is informed to reinstall the orientation of the sensor 3 in a direction nearer to the endpoint P4 (step S207). That is, the user is informed to reinstall the orientation of the sensor 3 in a clockwise manner viewed from the normal direction of the projection surface F in FIG. 12. The user thus informed may reinstall so that the position of the sensor 3 is at the appropriate position. Then, the calibration process returns to step S201.

Furthermore, if the reflected lights from both endpoints P1, P2 of the lower edge Ea1 are not detected (NO at step S204), whether the reflected light from one of either of both of the two endpoints P1, P2 is detected is determined (step S208).

If the reflected light from one of the endpoints is detected (YES at step S208), the sensor 3 determines whether the reflected light from the endpoint P1 of the lower edge Ea1 is detected (step S209). If the reflected light from the endpoint P1 of the lower edge Ea1 is detected (YES at step S209), the user is informed to reinstall the orientation of the sensor 3 in the direction away from the endpoint P1 (that is, counterclockwise in FIG. 12) (step S210). The user thus informed may reinstall so that the position of the sensor 3 is at the appropriate position. Then, the calibration process returns to step S201.

Furthermore, if the reflected light from the endpoint P1 of the lower edge Ea1 is not detected (NO at step S209), the user is informed to reinstall the orientation of the sensor 3 in the direction nearer to the endpoint P1 (that is, clockwise in FIG. 12) (step S211). The user thus informed may reinstall so that the position of the sensor 3 is at the appropriate position. Then, the calibration process returns to step S201.

Furthermore, if the reflected light from both of the two endpoints P1, P2 are not detected at all in step S208 (NO at step S208), the user is informed to reinstall the sensor 3 away from the projection region Aa in the X direction (step S212). The user thus informed may reinstall so that the position of the sensor 3 is at the appropriate position. Then, the calibration process returns to step S201.

The calibration process of the installation position of the sensor 3 in one or more embodiments the first example of the present invention was described above. In step S205 of the calibration process described above, whether the reflected light from the endpoint P3, instead of the reflected light from the endpoint P4, is detected may be determined. It is needless to say that in this situation, processes in steps S206 and S207 are interchanged. That is, in step S206, the user is informed to reinstall the orientation of the sensor 3 in the direction away from the endpoint P3 (that is, clockwise in FIG. 12). Moreover, in step S207, the user is informed to reinstall the orientation of the sensor 3 in the direction nearer to the endpoint P3 (that is, counterclockwise in FIG. 12).

Furthermore, in step S209 of the calibration process described above, whether the reflected light from the endpoint P2, instead of the reflected light from the endpoint P1, is detected may be determined. It is needless to say that in this situation, processes in steps S210 and S211 are interchanged. That is, in step S210, the user is informed to reinstall the orientation of the sensor 3 in the direction away from the endpoint P2 (that is, clockwise in FIG. 12). Moreover, in step S211, the user is informed to reinstall the orientation of the sensor 3 in the direction nearer to the endpoint P2 (that is, counterclockwise in FIG. 12).

As above, the projector 1 according to one or more embodiments the first example of the present invention comprises the projector device 2 that projects the scanning laser light Ra to the projection region Aa on the projection surface F and the sensor 3 disposed away from the projector device 2. The sensor 3 includes the light detector 31 and the notification light emitter 37. The light detector 31 detects the reflected light of the scanning laser light Ra projected from the projector device 2. The notification light emitter 37 emits to the projection surface F the notification light Rb for indicating the inclination of the sensor 3 relative to the projection surface F in the detectable region (not illustrated) where the light detector 31 detects the reflected light of the scanning laser light Ra and setting the position of the projection region Aa.

According to one or more embodiments of the above configuration, the projector 1 may further be made smaller in size because the projector device 2 and the sensor 3 are disposed separately from each other. Moreover, the restriction on the installation location of the projector 1 may also be mitigated. Moreover, the projection region Aa may be set to a desired size according to the relative position of the projector device 2 relative to the projection surface F because the projector device 2 may be disposed in any position without being restricting by the installation position of the sensor 3. Moreover, disposition of the sensor 3 may be adjusted based on the notification light Rb emitted from the notification light emitter 37 to set the projection region Aa in the detectable region (not illustrated) of the light detector 31. Therefore, the sensor 3 may detect the reflected light of the scanning laser light Ra projected from the projector device 2 even when the projector device 2 and the sensor 3 are disposed separately from each other.

Furthermore, in the projector 1 according to one or more embodiments the first example of the present invention, the notification light Rb projects the notification lines L on the projection surface F. These notification lines L are projection images for setting the position of at least the lower edge Ea1, which is included in the outer periphery of the projection region Aa and is nearest to the sensor 3, in the detectable region (not illustrated).

By configuring in this manner, the position of the projection region Aa may be set in the detectable region (not illustrated) of the sensor 3 by setting the position of at least the lower edge Ea1, which is nearest to the sensor 3, of the projection region Aa based on the projection images (notification lights L) of the notification light Rb.

Furthermore, in the projector 1 according to one or more embodiments the first example of the present invention, the sensor 3 further includes the region determinator 332 that determines, based on the detection result of the light detector 31, whether a portion or the entirety of the projection region Aa is outside the detectable region.

The reflected light of the scanning laser light Ra projected from the projector device 2 to the projection region Aa, for example, is incident to the light detector 31. Therefore, the region determinator 332 may be made to determine whether a portion or the entirety of the projection region Aa is outside the detectable region based on the detection result of the light detector 31 that detects this reflected light.

Furthermore, in the projector 1 according to one or more embodiments the first example of the present invention, the region determinator 332 determines whether both endpoints P1, P2 of at least the lower edge Ea1, which is included in the outer periphery of the projection region Aa and is nearest to the sensor 3, are in the detectable region.

When the projection region Aa is in the detectable region of the light detector 31, both endpoints P1, P2 of at least the lower edge Ea1, which is nearest to the sensor 3, of the projection region Aa are in the detectable region. Moreover, in this situation, both endpoints P3, P4 of the upper edge Ea2, which is farthest from the sensor 3, are often also in the detectable region. Conversely, even if both endpoints P3, P4 of the upper edge Ea2, which is farthest from the sensor 3, are in the detectable region, there is a high possibility that both endpoints P1, P2 of the lower edge Ea1, which is nearest to the sensor 3, are not in the detectable region. Therefore, whether the projection region Aa is in the detectable region is more reliably and easily determined by determining whether at least both endpoints P1, P2 are in the detectable region.

Furthermore, in the projector 1 according to one or more embodiments the first example of the present invention, the sensor 3 further includes the information output device 36 that informs based on the determination result of the region determinator 332.

By configuring in this manner, the user may be informed with various notifications relating to the relationship between the detectable region (not illustrated) of the light detector 31 and the projection region Aa based on the determination result of the region determinator 332.

Furthermore, in the projector 1 according to one or more embodiments the first example of the present invention, the information output device 36, when the region determinator 332 determines that at least a portion of the projection region Aa is outside the detectable region, outputs a correction method for setting the projection region Aa in the detectable region. The output correction method is a method for correcting the installation position and/or the orientation of the sensor 3.

By configuring the projector in this manner, the user may be informed with the correction method for setting the projection region Aa in the detectable region when at least a portion of the projection region Aa is determined to be outside the detectable region of the light detector 31. Therefore, the user may correct the installation position and/or the orientation relative to the sensor 3 based on the informed correction method. Therefore, the user may conveniently set the entirety of the projection region Aa in the detectable region.

(Second Example)

Next, one or more embodiments of a second example of the present invention will be described.

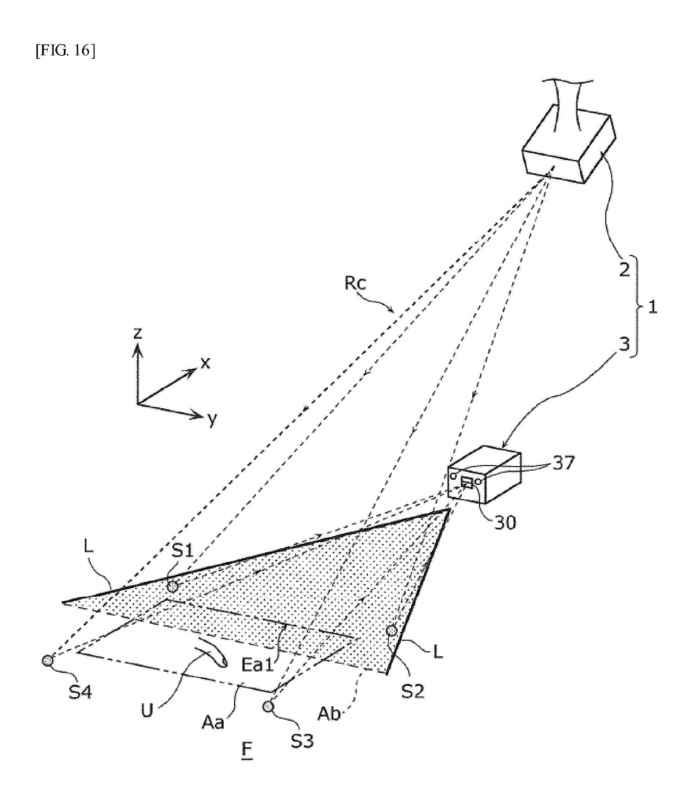

FIG. 16 is an external perspective view of the projector according to one or more embodiments of the second example of the present invention. In FIG. 16, to facilitate understanding of the main portions, illustration is omitted for the scanning laser light Ra, the notification light Rb, and the reflected lights thereof.

As illustrated in FIG. 16, in one or more embodiments of the second example of the present invention, a regulatory light Rc for regulating the projection region Aa is projected from the projector device 2, and projection images thereof (spots S1 to S4) are projected to the projection surface F. The sensor 3 detects a reflected light of the regulatory light Rc reflected at each spot S1 to S4 and informs based on a detection result thereof. Then, the user installs the projector 1 while referring to the two spots S1, S2 positioned near both ends of the lower edge Ea1 of the projection region Aa and to the two notification lines L (virtual region Ab). Other than this, one or more embodiments of the second example of the present invention are similar to the first example of the present invention. Hereinbelow, same reference numbers will be used in configurations similar to those in the first example, and the description thereof will be omitted.

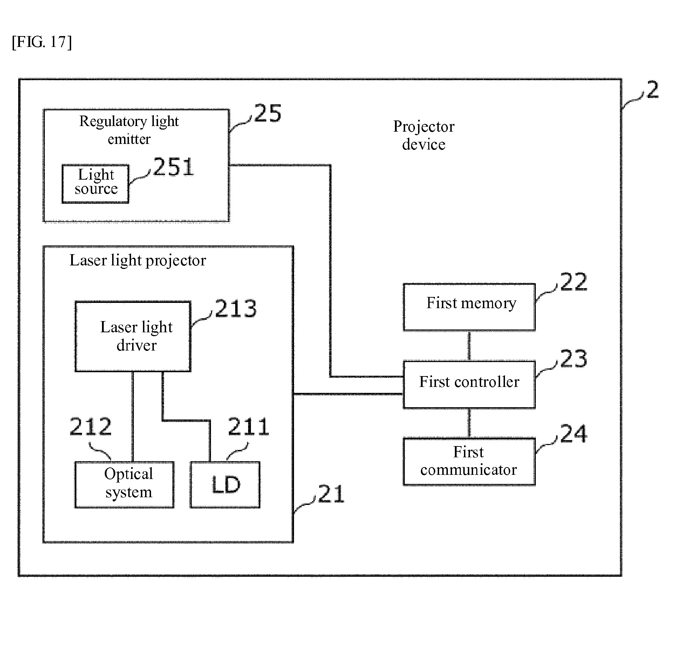

FIG. 17 is a block diagram illustrating a configuration of the projector according to one or more embodiments of the second example of the present invention. The projector device 2 may further comprise a regulatory light emitter 25. This regulatory light emitter 25 may include a light source 251 that emits the regulatory light Rc of the wavelength in the visible light region and projects on the projection surface F a projection image configured including the four spots S1 to S4. While the light source 251 of the regulatory light Rc is not limited in particular, the light-emitting element that emits the light in the visible light region, such as the laser diode element or the LED; the discharge tube; or the like may be illustrated as such.

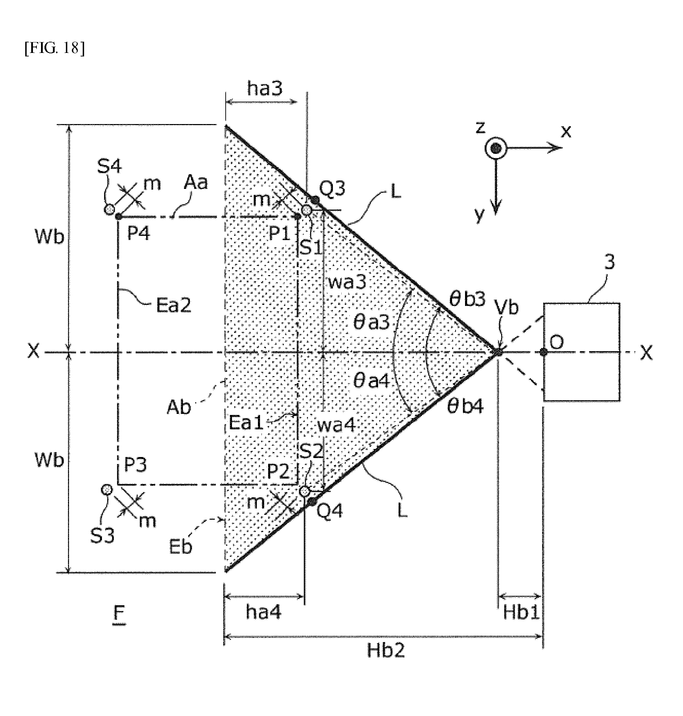

Next, exemplary installation conditions of the projector 1 according to one or more embodiments of the second example of the present invention will be described. FIG. 18 is a plan view illustrating the positional relationship between the projection region and the notification lines in one or more embodiments of the second example of the present invention. In FIG. 18, to facilitate understanding of the main portions, illustration is omitted for the scanning laser light Ra, the notification light Rb, the regulatory light Rc, and the reflected lights thereof.

As illustrated in FIG. 18, the sensor 3 may be installed on the projection surface F so that the spots S1, S2 are positioned in the virtual region Ab between the two notification lines L. At this time, a virtual line segment connecting the spots S1, S2 may be substantially parallel to the lower edge Eb1 and the upper edge Eb2 of the virtual region Ab.

Furthermore, as illustrated in FIG. 18, the four spots S1 to S4 projected by the regulatory light emitter 25 may be respectively projected to regions near the four endpoints P1 to P4 of the projection region Aa. A center point of each spot S1 to S4 may be separated from each endpoint P1 to P4 of the projection region Aa only by m (m $\geq$ 0). In FIG. 18, gaps between each center point of the spots S1 to S4 and each endpoint P1 to P4 (that is, a minimum distance between the two) are the same but may be different. Moreover, each shape of the spots S1 to S4 are not limited in particular. Each shape may be, for example, circular, as in FIG. 18; polygonal (n-angle shaped: n is a positive integer not less than 3); or cross-shaped. Moreover, the shape of each spot S1 to S4 may all be the same, or at least one shape may be different.

These spots S1 to S4 are used to set the position of the projection region Aa. In one or more embodiments of the second example of the present invention, the sensor 3 may detect the reflected light from the projection region Aa if the spots S1, S2 near both endpoints P1, P2 of the lower edge Ea1 of the projection region Aa are in the virtual region Ab between the two notification lines L. Because of this, the user may install the projector 1 (in particular, the sensor 3) in the appropriate position while referring to the two spots S1, S2 and the two notification lines L (virtual region Ab).

These four spots S1 to S4 are only projected in an installation period of the projector 1 (for example, during the calibration process of the installation position of the sensor 3) but may be projected in periods other than this or may be continuously projected. Moreover, projection and projection stopping of the four spots S1 to S4 may be switched according to an operation input by the user accepted by the operator 35.

Conditions for making the projection region Aa be in the detectable region of the sensor 3 may be represented by the following three formulas 4 to 6.

$$0 < wa3, wa4 \leq Wb \qquad \text{(Formula 4)}$$

$$0 \leq ha3, ha4 \leq (Hb2-Hb1) \qquad \text{(Formula 5)}$$

$$\theta a3 \leq \theta b3, \text{ and } \theta a4 \leq \theta b4 \qquad \text{(Formula 6)}$$

Here, in formula 4 described above, a gap (that is, a shortest distance in the Y direction) between the center point of the spot S1 and the one-dot chain line X-X is defined as wa3, and a gap between the center point of the spot S2 and the one-dot chain line X-X is defined as wa4. Moreover, the gap between the endpoint of the edge Eb of the virtual region Ab between the two notification lines L and the one-dot chain line X-X is defined as Wb.

Moreover, in formula 5 described above, a gap (that is, a shortest distance in the X direction) between the center point of the spot S1 and the edge Eb of the virtual region Ab is defined as ha3, and a gap between the center point of the spot S2 and upper edge Eb2 is defined as ha4. Moreover, the distance in the X direction between the endpoint Vb of the virtual region Ab and the orthogonal projection point O is defined as Hb1, and the distance in the X direction between the edge Eb of the virtual region Ab and the orthogonal projection point O is defined as Hb2. However, 0 < Hb1 < Hb2.

Furthermore, in formula 6 described above, an angle formed by a virtual line passing through the center point of the spot S1 and the endpoint Vb of the virtual region Ab and the one-dot chain line X-X is defined as $\theta a3$, and an angle formed by a virtual line passing through the center point of the spot S2 and the endpoint Vb of the virtual region Ab and the one-dot chain line X-X is defined as $\theta a4$. Moreover, an angle formed by a virtual line passing through a point Q3 on the notification line L nearest to the spot S1 and the endpoint Vb of the virtual region Ab and the one-dot chain line X-X is defined as $\theta b3$. Moreover, an angle formed by a virtual line passing through a point Q4 on the notification line L nearest to the spot S2 and the endpoint Vb of the virtual region Ab and the one-dot chain line X-X is defined as $\theta b4$.

Both endpoints P1, P2 of the lower edge Ea1 of the projection region Aa are away from the outer periphery of the virtual region Ab (that is, 0 < wa3, Wa4 < Wb in formula 4 described above; 0 < ha3, ha4 < (Hb2-Hb1) in formula 5 described above; and θa3 < θb3 and θa4 < θb4 in formula 6 described above; wa3 = wa4 in formula 4 described above and θa3 = θa4 in formula 6 described above). By configuring in this manner, the sensor 3 may reliably detect the reflected light from the entirety of the projection region Aa because the spots S1, S2 may be more accurately positioned in the virtual region Ab.

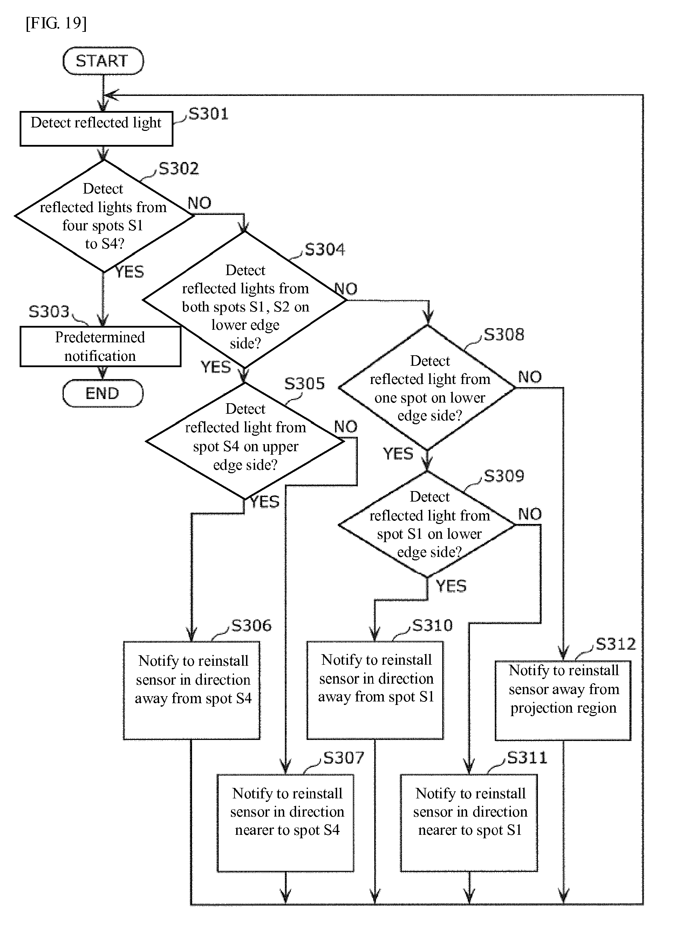

Next, a calibration process of the installation position of the sensor 3 according to one or more embodiments will be specifically described. FIG. 19 is a flowchart for describing the calibration process of the installation position of the sensor in one or more embodiments of the second example of the present invention. When the calibration process in FIG. 19 starts, the regulatory light Rc is being projected to the projection surface F from the projector device 2 and the notification light Rb is being emitted from the sensor 3.

First, the sensor 3 detects the reflected light of the regulatory light Rc reflected at the projection region Aa (step S301). Moreover, the sensor 3, based on the detection result of the reflected light, determines whether reflected lights from the four spots S1 to S4 are all detected (step S302).

If the reflected lights from the four spots S1 to S4 are all detected (YES at step S302), the user is informed with the predetermined notification (step S303). For example, the user is informed that the sensor 3 is installed in the appropriate position. Additionally, the user may also be informed with a guide to an installation method where the virtual line segment connecting the spots S1, S2 (that is, the lower edge Ea1 of the projection region Aa) becomes substantially parallel to the lower edge Eb2 of the virtual region Ab between the two notification lines L. Then, after the user is informed that the calibration process is completed, the calibration process in FIG. 15 ends.

Furthermore, if the reflected light from any of the four spots S1 to S4 are not detected (NO at step S302), whether the reflected lights from both spots S1, S2 on a lower edge Ea1 side of the projection region Aa are detected is determined (step S304).

If the reflected lights from both of the two spots S1, S2 are detected (YES at step S304), the sensor 3 further determines whether the reflected light from one spot S4 on an upper edge Ea2 side of the projection region Aa is detected (step S305).

If the reflected light from the one spot S4 is detected (YES at step S305), the user is informed to reinstall the orientation of the sensor 3 in a direction away from the spot S4 (step S306). That is, the user is informed to reinstall the orientation of the sensor 3 in a counterclockwise manner viewed from the normal direction (Z direction) of the projection surface F in FIG. 18. The user thus informed may reinstall so that the position of the sensor 3 is at the appropriate position. Then, the calibration process returns to step S301.

If the reflected light from the one spot S4 is not detected (NO at step S305), the user is informed to reinstall the orientation of the sensor 3 in a direction nearer to the spot S4 (step S307). That is, the user is informed to reinstall the orientation of the sensor 3 in a clockwise manner viewed from the normal direction of the projection surface F in FIG. 18. The user thus informed may reinstall so that the position of the sensor 3 is at the appropriate position. Then, the calibration process returns to step S301.

Furthermore, if the reflected light from both of the two spots S1, S2 on the lower edge Ea1 side are not detected (NO at step S304), whether the reflected light from one of either of the two spots S1, S2 is detected is determined (step S308).

If the reflected light from one of the spots is detected (YES at step S308), the sensor 3 determines whether the reflected light from the spot S1 on the lower edge Ea1 side is detected (step S309). If the reflected light from the spot S1 is detected (YES at step S309), the user is informed to reinstall the orientation of the sensor 3 in the direction away from the spot S1 (that is, counterclockwise in FIG. 18) (step S310). The user thus informed may reinstall so that the position of the sensor 3 is at the appropriate position. Then, the calibration process returns to step S301.

Furthermore, if the reflected light from the spot S1 on the lower edge Ea1 side is not detected (NO at step S309), the user is informed to reinstall the orientation of the sensor 3 in a direction nearer to the spot S1 (that is, clockwise in FIG. 18) (step S311). The user thus informed may reinstall so that the position of the sensor 3 is at the appropriate position. Then, the calibration process returns to step S301.

Furthermore, if the reflected light from both of the two spots S1, S2 are not detected at all in step S308 (NO at step S308), the user is informed to reinstall the sensor 3 away from the projection region Aa in the X direction (step S312). The user thus informed may reinstall so that the position of the sensor 3 is at the appropriate position. Then, the calibration process returns to step S301.

The calibration process of the installation position of the sensor 3 in one or more embodiments of the second example of the present invention was described above. In step S305 of the calibration process described above, whether the reflected light from the spot S3, instead of the reflected light from the spot S4, is detected may be determined. It is needless to say that in this situation processes in steps S306 and S307 are interchanged. That is, in step S306, the user is informed to reinstall the orientation of the sensor 3 in a direction away from the spot S3 (that is, clockwise in FIG. 18). Moreover, in step S307, the user is informed to reinstall the orientation of the sensor 3 in a direction nearer to the spot S3 (that is, counterclockwise in FIG. 18).

Furthermore, in step S309 of the calibration process described above, whether the reflected light from the spot S2, instead of the reflected light from the spot S1, is detected may be determined. It is needless to say that in this situation processes in steps S310 and S311 are interchanged. That is, in step S310, the user is informed to reinstall the orientation of the sensor 3 in a direction away from the spot S2 (that is, clockwise in FIG. 18). Moreover, in step S311, the user is informed to reinstall the orientation of the sensor 3 in a direction nearer to the spot S2 (that is, counterclockwise in FIG. 18).

As described above, the projector 1 according to one or more embodiments of the second example of the present invention may comprise the projector device 2 including the laser light projection 21 that projects the scanning laser light Ra and the regulatory light emitter 25 that emits the regulatory light Rc for regulating the projection region Aa.

By configuring the projector 1 in this manner, the position of the projection region Aa may be set in the detectable region of the light detector 31 based on the regulatory light Rc (or the spots S1 to S4) for regulating the projection region Aa and the notification light Rb (or the notification lines L).

(Third Example)

Next, one or more embodiments of a third example of the present invention will be described. In the third example, the sensor 3 may comprise a mechanism that automatically adjusts the installation position and/or the orientation of the sensor 3 based on the detection result of the reflected light by the light detector 31. Other than this, the third example may be similar to one or more embodiments of the first or second examples of the present invention. Hereinbelow, the same reference numbers will be used in configurations similar to those of the first and second examples, and the description thereof will be omitted.

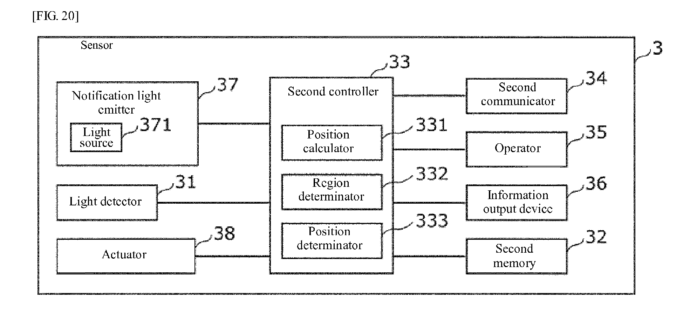

FIG. 20 is a block diagram illustrating the configuration of the sensor according to one or more embodiments of the third example of the present invention. As illustrated in FIG. 20, the sensor 3 may further comprise an actuator 38. Moreover, the second controller 33 may further comprise a position determinator 333. The position determinator 333 may be realized as an electrical circuit or may be a functional unit of the second controller 33 realized by using the program and the control information stored in the second memory 32.

The position determinator 333 determines the relative position of the projection region Aa relative to the detectable region of the light detector 31 based for example on the detection result by the light detector 31 of each reflected light (for example, the reflected lights of the scanning laser light Ra and the regulatory light Rc) from the projection surface F. Moreover, the position determinator 333 may, based on a determination result thereof, calculate position correction amounts of the installation position and/or the orientation of the sensor 3 for positioning the projection region Aa in the detectable region of the light detector 31. In this situation, the position determinator 333 may calculate position correction amounts where the lower edge Ea1 of the projection region Aa is substantially parallel to the lower edge Eb2 in the virtual region Ab between the two notification lines L.

The actuator 38 may be a driver that automatically adjusts the installation position and/or the orientation of the sensor 3. The actuator 38 drives the sensor 3 in the X direction, the Y direction, the Z direction, and rotation directions with each direction as axes thereof based on the determination result of the position determinator 333. For example, the actuator 38 drives the sensor 3 so that the projection region Aa enters the detectable region based on the relative position of the projection region Aa determined by the position determinator 333. Alternatively, the sensor 3 may be driven based on the position correction amounts calculated by the position determinator 333. By configuring in this manner, there is no need for the user to reinstall the sensor 3 by hand. Therefore, the installation position and/or the orientation of the sensor 3 may be conveniently calibrated. The actuator 38 may drive the sensor 3 according to an operation input by the user accepted by the operator 35.

As described above, in one or more embodiments of the third example of the present invention, the sensor 3 may further include the position determinator 333 and the actuator 38. The position determinator 333 determines, based on the detection result of the light detector 31, the relative position of the projection region Aa relative to the detectable region. The actuator 38 adjusts the installation position and/or the orientation of the sensor 3 based on the determination result of the position determinator 333.

By configuring in this manner, in the sensor 3, the installation position and/or the orientation of the sensor 3 may be adjusted by the actuator 38 based on the determination result of the position determinator 333. Therefore, the entirety of the projection region Aa may be automatically set in the detectable region without the user reinstalling the sensor 3 by hand. Moreover, even if the projection region Aa moves outside the detectable region after installation of each device 2, 3, the projection region Aa may be automatically set in the detectable region.

(Modified Example of Third Example)

Next, a modified example of one or more embodiments of the third example of the present invention will be described. In the modified example of the third example, the sensor 3 may include a mechanism that detects the inclination of the sensor 3 and automatically adjusts the installation position and/or the orientation of the sensor 3 based on the detection result. Other than this, the modified example of the third example may be similar to one or more embodiments of the first or second examples of the present invention. Hereinbelow, the same reference numbers will be used in configurations similar to those in one or more embodiments of the first or second examples of the present invention, and the description thereof will be omitted.

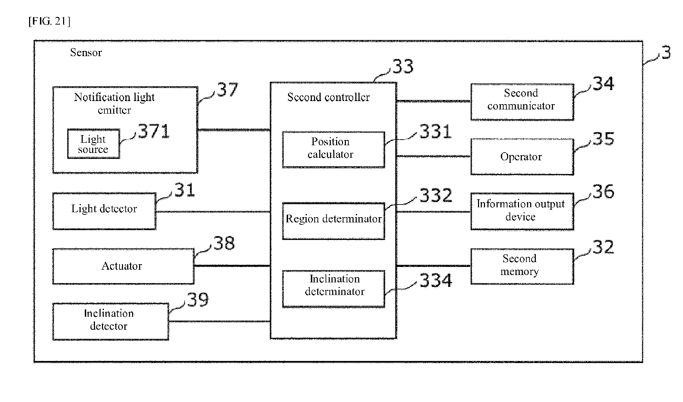

FIG. 21 is a block diagram illustrating the configuration of the sensor according to the modified example of one or more embodiments of the third example of the present invention. As illustrated in FIG. 21, the sensor 3 may include the actuator 38 and an inclination detector 39. Moreover, the second controller 33 may include an inclination determinator 334. The inclination determinator 334 may be realized as an electrical circuit or may be a functional unit of the second controller 33 realized by using the program and the control information stored in the second memory 32.

The inclination detector 39 may be, for example, a sensor that detects a change in an attitude, such as a gyro sensor, and detects a change amount in the inclination of the sensor 3.

The inclination determinator 334 determines a shift amount from an origin point of the inclination of the sensor 3 based on a detection result by the inclination detector 39 of the change amount in the inclination, the origin point being an inclination when the sensor 3 is installed parallel to the projection surface F. The inclination determinator 334 may recognize the origin point according to, for example, an operation input by the user accepted by the operator 35. Moreover, the inclination determinator 334 may determine the shift amount by adding, from the origin point, the change amount in the inclination detected by the inclination detector 39. Moreover, the inclination determinator 334 may calculate the position correction amounts of the installation position and/or the orientation of the sensor 3 for positioning the sensor 3 parallel to the projection surface F based on the determination result of the shift amount.

The actuator 38 may automatically adjust the installation position and/or the orientation of the sensor 3. The actuator 38 may drive the sensor 3 in the rotation direction with the axis thereof in the Y direction based on the determination result of the inclination determinator 334. For example, the actuator 38 drives the sensor 3 so that the sensor 3 becomes parallel to the projection surface F based on the shift amount of the inclination of the sensor 3 determined by the inclination determinator 334. Alternatively, the sensor 3 may be driven based on the position correction amounts calculated by the position determinator 333. By configuring in this manner, there is no need for the user to reinstall the sensor 3 by hand. Therefore, the inclination of the sensor 3 may be conveniently calibrated.

As described above, in the modified example of one or more embodiments of the third example of the present invention, the sensor 3 may include the inclination determinator 334, the inclination detector 39, and the actuator 38. The inclination determinator 334 determines the shift amount of the inclination of the sensor 3 from an origin point direction parallel to the projection surface F based on the detection result of the inclination detector 39. The actuator 38 adjusts the orientation of the sensor 3 based on the determination result of the inclination determinator 334.

By configuring in this manner, in the sensor 3, the orientation of the sensor 3 is adjusted by the actuator 38 based on the determination result of the inclination determinator 334. Therefore, the sensor 3 may automatically be set parallel to the projection surface F without the user reinstalling the sensor 3 by hand. Moreover, the sensor 3 may be installed parallel to the projection surface F even if the inclination of the sensor 3 changes after installation of the sensor 3.

The actuator 38 is described as automatically adjusting the installation position and/or the orientation of the sensor 3. For example, the actuator 38 may automatically adjust an orientation of the light detector 31 relative to the sensor 3. According to such a configuration, the sensor 3, even when inclined from the projection surface F, may adjust the orientation of the light detector 31 so that the detection region (see FIG. 8A) of the light detector 31 covers over the entirety of the projection region Aa at the uniform height.

(Fourth Example)

Next, one or more embodiments of a fourth example of the present invention will be described. In the fourth example, the projector device 2 may include a mechanism that automatically adjusts an installation position and an orientation of the projector device 2 based on the detection result of the light detector 31. Moreover, the position of the projection region Aa relative to the detectable region (not illustrated) of the sensor 3 may be adjusted by adjusting the installation direction and/or the orientation of the projector device 2. Other than this, the fourth example may be similar to the first or second examples. Hereinbelow, the same reference numbers will be used in configurations similar to those in the first or second example, and the description thereof will be omitted.

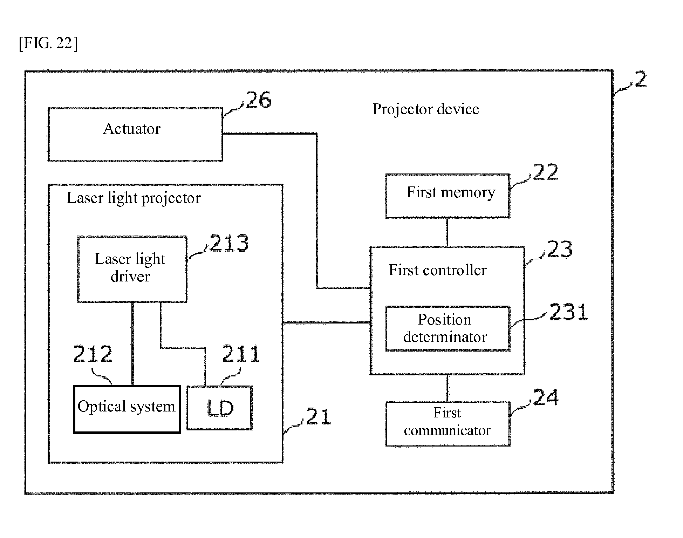

FIG. 22 is a block diagram illustrating the configuration of the projector device according to the fourth example. As illustrated in FIG. 22, the projector device 2 may include an actuator 26 and a regulatory light emitter 25 of a similar configuration to that of the second example. Moreover, the first controller 23 may include a position determinator 231. The position determinator 231 may be realized as an electrical circuit or may be a functional unit of the second controller 23 realized by using the program and the control information stored in the second memory 22.

The position determinator 231 may determine, based on the detection result of the light detector 31 the first communicator 24 receives from the sensor 3, the relative position of the projection region Aa relative to the detectable region. Moreover, the position determinator 231 may, based on a determination result thereof, calculate the position correction amounts of the installation position and/or the orientation of the sensor 3 for positioning the projection region Aa in the detectable region of the light detector 31. In this situation, the position detector 231 may calculate the position correction amounts where the lower edge Ea1 of the projection region Aa is substantially parallel to the lower edge Eb2 in the virtual region Ab between the two notification lines L.

The actuator 26 may automatically adjust the installation position and/or the orientation of the projector device 2. The actuator 26 may drive the projector device 2 in the X direction, the Y direction, the Z direction, and rotation directions with each direction as axes thereof based on the determination result of the position determinator 231. For example, the actuator 26 drives the projector device 2 so that the projection region Aa enters the detectable region based on the relative position of the projection region Aa determined by the position determinator 231. Alternatively, the projector device 2 may be driven based on the position correction amounts calculated by the position determinator 231. By configuring in this manner, there is no need for the user to reinstall the projector device 2 by hand. Therefore, the installation position and/or the orientation of the projector device 2 may be conveniently calibrated. The actuator 26 may drive the projector device 2 according to an operation input by the user accepted by the operator 35.

As described above, in the fourth example, the projector device 2 may include the position determinator 231 and the actuator 26. The position determinator 231 determines, based on the detection result of the light detector 31, the relative position of the projection region Aa relative to the detectable region. The actuator 26 adjusts the installation position and/or the orientation of the projector device 2 based on the determination result of the position determinator 231.

By configuring in this manner, in the projector device 2, the installation position and the orientation of the projector device 2 are adjusted by the actuator 26 based on the determination result of the position determinator 231. Therefore, the entirety of the projection region Aa may be automatically set in the detectable region without the user reinstalling the projector device 2 by hand. Moreover, the projection region Aa may be automatically set in the detectable region even if the projection region Aa moves outside the detectable region after installation of each device 2, 3.

(Modified Example of Fourth Example)

In the fourth example, only the projector device 2 is of a configuration (see FIG. 20) comprising the position determinator 231 and the actuator 26, but the sensor 3 may be of a configuration (see FIG. 19) including the position determinator 333 and the actuator 38, similar to the third example. By configuring in this manner, the installation positions and the orientations of both the projector device 2 and the sensor 3 may be automatically adjusted. Moreover, at least either the installation positions or the orientations of the projector device 2 and the sensor 3 may be adjusted.

In this manner, in the modified example of the fourth example, the projector device 2 may include the position determinator 231 and the actuator 26. Moreover, the sensor 3 may include the position determinator 333 and the actuator 38. Each of the position determinators 213, 333 determine, based on the detection result of the light detector 31, the relative position of the projection region Aa relative to the detectable region. The actuator 26 adjusts at least either the installation position or the orientation of the projector device 2 based on the determination result of the position determinator 231. Moreover, the actuator 38 adjusts at least either the installation position or the orientation of the sensor 3 based on the determination result of the position determinator 333.

By configuring in this manner, at least either the installation positions or the orientations of the projector device 2 and the sensor 3 are adjusted by the actuators 26, 38 based on the determination results of the position determinators 231, 333. Therefore, the entirety of the projection region Aa may be automatically set in the detectable region without the user reinstalling the projector device 2 and the sensor 3 by hand. Moreover, the projection region Aa may be automatically set in the detectable region even if the projection region Aa moves outside the detectable region after installation of each device 2, 3.

(Fifth Example)

Next, one or more embodiments of a fifth example of the present invention will be described. In the first to fourth examples, the notification light Rb projects (see FIG. 1) the notification lines L, which are projection images of a line-segment shape, to the projection surface F, but in the fifth example, the notification light Rb projects notification points S, which are projection images of a spot shape, to the projection surface F.

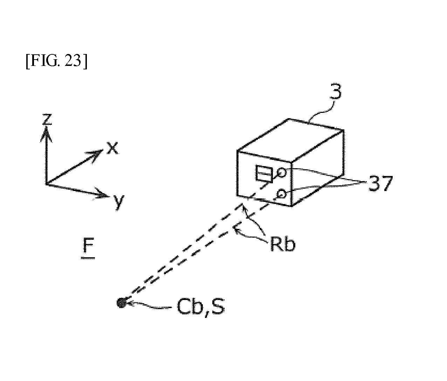

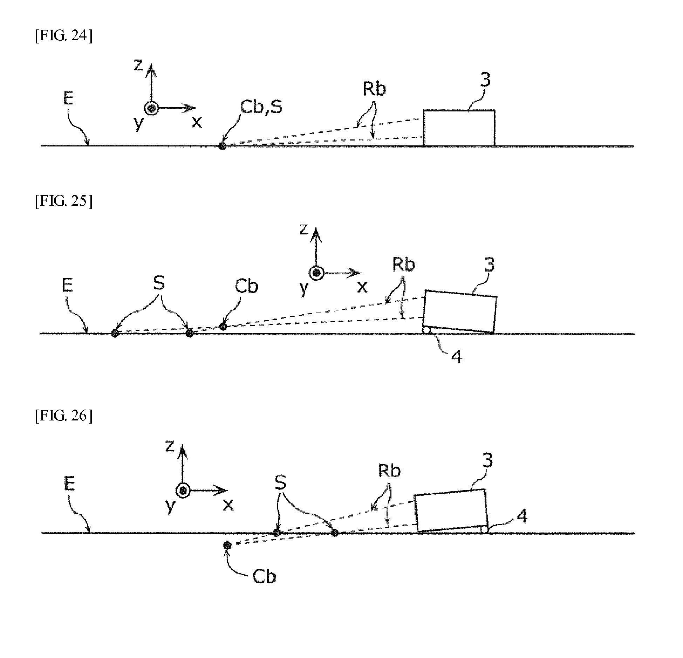

FIG. 23 is an external perspective view of the sensor 3 according to one or more embodiments of the fifth example. Moreover, FIG. 24 is a side view illustrating case in which the sensor 3 is installed at the predetermined inclination relative to the projection surface F. Moreover, FIG. 25 is a side view illustrating the case in which the sensor 3 is installed at the first inclination, which is different from the predetermined inclination, relative to the projection surface F. Moreover, FIG. 26 is the side view illustrating the case in which the sensor 3 is installed at the second inclination, which is different from the predetermined inclination, relative to the projection surface F. To facilitate the description, the case in which the sensor 3 is installed at the predetermined inclination relative to the projection surface F is referred to hereinbelow as the case in which the sensor 3 is installed parallel to the projection surface F.

As illustrated in FIG. 23, in the fifth example, as one example, the notification light emitter 37 is disposed lined up in the Z direction. Moreover, as illustrated in FIG. 24, in the case in which the sensor 3 is installed parallel to the projection surface F, the emission direction of each notification light Rb is fixed relative to the sensor 3 so each notification light Rb passes through the same point on the projection surface F.

By the emission direction of each notification light Rb being fixed in this manner, the intersection Cb of the notification lights Rb is positioned on the projection surface F in the case in which the sensor 3 is installed parallel to the projection surface F. Because of this, the notification points S of the spot shape that overlap each other are projected to the projection surface F.

As illustrated in FIG. 25, when the sensor 3 is installed at the first inclination that is not parallel to the projection surface F due to, for example, the light incidence surface 30 side of the sensor 3 being lifted up by the foreign object 4, the intersection Cb of the notification lights Rb is positioned above the projection surface F. Because of this, two notification points S separated from each other are projected on the projection surface F.

As illustrated in FIG. 26, when the sensor 3 is installed at the second inclination that is not parallel to the projection surface F due to, for example, the side of the sensor 3 opposite the light incidence surface 30 being lifted up by the foreign object 4, the intersection Cb of the notification lights Rb is positioned below the projection surface F. Because of this, two notification points S separated from each other are projected on the projection surface F.

The user may determine whether the sensor 3 is disposed parallel to the projection surface F by whether the two notification points S projected on the projection surface F are overlapping each other so as to appear to be one point and may adjust disposal of the sensor 3 so that the sensor 3 becomes parallel to the projection surface F.

An example where the notification light emitter 37 is disposed lined up in the Z direction is described, but, for example, the notification points S may be projected to four positions corresponding to both ends of each of the two notification lines L described in the first example by emitting the notification light Rb from the notification light emitter 37 disposed lined up in the Y direction. In the case in which the sensor 3 is disposed parallel to the projection surface F, endpoints of each notification line L near the sensor 3 are positioned at a same point on the projection surface F (see FIG. 9A and FIG. 9B). Because when disposal of the sensor 3 is adjusted so that the notification points S projected to the positions of these endpoints overlap each other so as to appear to be one point the overlapping notification points S indicate the endpoint Vb of the virtual region Ab and the other two notification points S indicate both ends of the edge Eb of the virtual region Ab, these notification points S may be used as reference points for regulating the position of the projection region Aa (see FIG. 12).

Embodiments of the present invention were described above. The embodiments described above are examples and various modifications are possible in each component and combinations of each process thereof, which modifications are understood by those skilled in the art to be within the scope of the present invention.

Furthermore, in the first to fourth examples described above, the shape of the notification lines L is a solid line, but the scope of application of the present invention is not limited to this example. The shape of the notification lines L is not limited in particular and may be, for example, a dashed line, a one-dot chain line, or a two-dot chain line, or may be a dot line configured by a plurality of spots lined up in series. Moreover, instead of the notification lines L, a triangular projection image corresponding to the virtual region Ab may be projected by projecting the notification light Rb.

Furthermore, in the first to fourth examples described above, the two notification lines L are used to regulate the position of the lower edge Ea1 of the projection region Aa, but the scope of application of the present invention is not limited to this example. The two notification lines L may be used to regulate a position of the entirety of the projection region. That is, the sensor 3 may be of a configuration that may detect the reflected light from the projection region Aa and the object U positioned thereover when a portion or the entirety of the projection region Aa is positioned in the virtual region Ab between the two notification lines L.

Furthermore, in the first to third examples described above, the installation position and the orientation of the sensor 3 are calibrated, and in the fourth example described above, the installation position and the orientation of the projector device 2 are calibrated, but the scope of application of the present invention is not limited to these examples. The installation position and the orientation of one of either the projector device 2 or the sensor 3 may be calibrated. Moreover, at least either the installation positions or the orientations of the projector device 2 and the sensor 3 may be adjusted.

Furthermore, in the first to fifth examples described above, the information output device 36 may output the correction method for setting the projection region Aa in the detectable region when at least a portion of the projection region Aa is determined to be outside the detectable region. In this situation, the correction method is a method for correcting at least either the installation position or the orientation of at least one device from among the projector device 2 and the sensor 3. By configuring in this manner, the user may be informed with the correction method for setting the projection region Aa in the detectable region when at least a portion of the projection region Aa is determined to be outside the detectable region of the light detector 31. Therefore, the user may correct at least either the installation position or the orientation of at least one device from among the projector device 2 and the sensor 3 based on the informed correction method. Therefore, the user may conveniently set the entirety of the projection region Aa in the detectable region.

Furthermore, in the first to fifth examples described above, the projector device 2 projects the scanning laser light Ra of the wavelength in the visible light region toward the projection surface F, but the scope of application of the present invention is not limited to this example. A scanning laser light Ra of a wavelength outside the visible light region (for example, infrared light or ultraviolet light) may be projected.

Furthermore, in the first to fifth examples, the projector 1 is described as an example of electronic device, but the electronic device is not limited to this example. The present invention is applicable to any electronic device configured including a projection device and a detection device that may be disposed separately and independently from each other. For example, the present invention may be a device that detects a position of an object positioned over a predetermined region mounted or printed with a photograph, a painting, or the like. In this situation, the projection device projects a predetermined light for regulating the predetermined region mounted or printed with a picture of a keyboard or the like as the projection region Aa. The detection device detects the position of the object U based on the reflected light from the object U positioned over this predetermined region.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

[Explanation of Reference Numbers]

| | |
|---|---|
| 1 | Projector |
| 2 | Projector device |
| 21 | Laser light projector |
| 211 | Laser diode (LD) |
| 212 | Optical system |
| 213 | Laser light driver |
| 22 | First memory |
| 23 | First controller |
| 231 | Position determinator |
| 24 | First communicator |
| 25 | Regulatory light emitter |
| 251 | Light source |
| 26 | Actuator |
| 3 | Sensor |
| 30 | Light incidence surface |
| 31 | Light detector |
| 32 | Second memory |
| 33 | Second controller |
| 331 | Position calculator |
| 332 | Region determinator |
| 333 | Position determinator |
| 334 | Inclination determinator |
| 34 | Second communicator |
| 35 | Operator |
| 36 | Information output device |
| 37 | Notification light emitter |
| 371 | Light source |
| 38 | Actuator |
| 39 | Inclination detector |
| F | Projection surface |
| Aa | Projection region |
| Ea1 | Lower edge |
| Ea2 | Upper edge |
| Ra | Laser light |
| Rb | Notification light |
| L | Notification line |
| Ab | Virtual region |

| Vb | Endpoint |
|---|---|
| Eb | Edge |
| Rc | Regulatory light |
| S1 to S4, Sb | Spot |
| U | Object |
| P1 to P4 | Endpoint |

**Claims**

1.  An electronic device (1), comprising:

    a projection device (2) configured to project a light to a projection region (Aa) on a projection surface (F); and
    a detection device (3) separately disposed from the projection device (2) and
    comprising:

    a light detector (31) configured to detect a reflected light of the light projected from the projection device (2); and
    a notification light emitter (37) configured to emit to the projection surface (F) a notification light (Rb) for indicating an inclination of the light detector (31) relative to the projection surface (F), wherein

    the notification light emitter (37) is further configured to emit the notification light (Rb) in directions respectively fixed relative to the detection device (3) from a plurality of locations in the detection device (3), each notification light (Rb) passing through a same point on the projection surface (F) when the detection device is installed at a predetermined inclination relative to the projection surface (F).

2.  The electronic device (1) according to claim 1, wherein, when the detection device (3) is installed at the predetermined inclination relative to the projection surface (F), each notification light (Rb) projects projection images of a spotted shape that overlap each other at the same point on the projection surface (F).

3.  The electronic device (1) according to claim 1, wherein, when the detection device (3) is installed at the predetermined inclination relative to the projection surface (F), each notification light (Rb) projects projection images of a line-segment shape where the same point on the projection surface (F) is an endpoint of each line-segment shape.

4.  The electronic device (1) according to any of claim 1 to 3, wherein the detection device (3) further comprises:

    an inclination detector (39) configured to detect an inclination of the detection device (3); and
    an inclination determinator (334) configured to determine, based on a detection result of the inclination detector (39), whether an inclination of the detection device (3) relative to the projection surface (F) is at the predetermined inclination.

5.  The electronic device (1) according to claim 4, wherein the detection device (3) further comprises an actuator (38) configured to adjust, based on a determination result of the inclination determinator (334), an inclination of the light detector relative to the detection device (3).

6.  The electronic device (1) according to claim 3, wherein the notification light (Rb) projects the projection images of the line-segment shape on the projection surface (F) as projection images for setting a position of at least an edge (Ea1) of an outer periphery of the projection region (Aa), nearest to the detection device (3) in a detectable region where the light detector (31) detects the reflected light.

7.  The electronic device (1) according to claim 6, wherein the projection device (2) comprises:

    a light projector (21) configured to project the light; and
    a regulatory light emitter (25) configured to emit a regulatory light (Rc) for regulating the projection region (Aa).

8.  The electronic device (1) according to claim 6 or 7, wherein the detection device (3) further comprises a region determinator (332) configured to determine, based on a detection result of the light detector (31), whether a portion or an entirety of the projection region (Aa) is outside the detectable region.

9. The electronic device (1) according to claim 8, wherein the region determinator (332) is further configured to determine whether both endpoints of at least the edge (Ea1) of the outer periphery of the projection region (Aa), nearest to the detection device (3) are in the detectable region.

10. The electronic device (1) according to claim 8 or claim 9, wherein the detection device (3) further comprises an information output device (36) configured to output information based on a determination result of the region determinator (332).

11. The electronic device (1) according to claim 10, wherein, when the region determinator (332) determines that at least a portion of the projection region (Aa) is outside the detectable region, the information output device (36) informs a correction method for setting the projection region (Aa) in the detectable region and for correcting at least either an installation position or an orientation of at least one of the projection device (2) and the detection device (3).

12. The electronic device (1) according to any of claims 6 to 11, wherein at least one of the projection device (2) and the detection device (3) further comprises:

   a position determinator (231, 333) configured to determine, based on the detection result of the light detection, a relative position of the projection region (Aa) relative to the detectable region; and
   an actuator (26, 38) configured to adjust, based on a determination result of the position determinator (231, 333), at least either the installation position or the orientation of at least one of the devices (2, 3).

[FIG. 1]

[FIG. 2]

[FIG. 3]

[FIG. 4A]

[FIG. 4B]

[FIG. 5]

[FIG. 6]

[FIG. 7]

START

Install projector device — S101

Project scanning laser light to projection surface — S102

Install sensor — S103

Project notification lines to projection surface — S104

Calibrate installation position of sensor — S105

END

[FIG. 8A]

Z

Y X

Dead region

E

Detection region

30 3

[FIG. 8B]

Dead region

Z X

Y

Detection region

Dead region

3

30

[FIG. 9A]

[FIG. 9B]

[FIG. 10A]

[FIG. 10B]

[FIG. 11A]

[FIG. 11B]

[FIG. 12]

EP 2 829 955 A2

[FIG. 13]

[FIG. 14]

37

[FIG. 15]

[FIG. 16]

[FIG. 17]

EP 2 829 955 A2

[FIG. 18]

41

[FIG. 19]

EP 2 829 955 A2

[FIG. 20]

43

[FIG. 21]

[FIG. 22]

[FIG. 23]

[FIG. 24]

[FIG. 25]

[FIG. 26]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012108233 A